# EUROPÄISCHE PATENTSCHRIFT

(11) **EP 2 545 141 B1**
(45) Veröffentlichungstag und Bekanntmachung des Hinweises auf die Patenterteilung: **22.08.2018**
(21) Anmeldenummer: 11705569.9
(22) Anmeldetag: 25.02.2011
(51) Int. Cl.: C10B 49/14, C10B 7/06, C10B 53/07, C10G 1/10

(54) **VORRICHTUNG ZUR PYROLYSE ORGANISCHER AUSGANGSSTOFFE**
DEVICE FOR THE PYROLYSIS OF ORGANIC STARTING MATERIALS
DISPOSITIF DE PYROLYSE DE SUBSTANCES ORGANIQUES

(30) Priorität: 09.03.2010 DE 102010002704
(43) Veröffentlichungstag der Anmeldung: 16.01.2013
(73) Patentinhaber: BOS Technology GmbH, 10787 Berlin (DE)
(72) Erfinder: RÖMER, Siegfried, 16244 Schorfheide (DE); LÖFFLER, Martin, 10178 Berlin (DE); JAGAU, Hermann, 21256 Handeloh-Höckel (DE); SCHIMKO, Richard, 12623 Berlin (DE)
(74) Vertreter: Eisenführ Speiser
(86) Internationale Anmeldenummer: PCT/EP2011/052824
(87) Internationale Veröffentlichungsnummer: WO 2011/110431

(56) Entgegenhaltungen:
- EP-A2- 1 277 789
- DE-A1- 10 212 105

## Beschreibung

Die vorliegende Erfindung betrifft eine Vorrichtung zur Pyrolyse organischer Ausgangsstoffe.

Eine Pyrolyse bezeichnet allgemein ein thermisches Spalten organischer Verbindungen. Dabei wird unter Sauerstoffausschluss und bei hohen Temperaturen, beispielsweise zwischen 300°C und 900°C, ein Bindungsbruch innerhalb größerer Moleküle eines Ursprungsmaterials erzwungen. Mittels der Pyrolyse des festen Ursprungsmaterials werden in der Regel Gase, Flüssigkeiten und Feststoffe gewonnen, wobei die Gase und Flüssigkeiten aus einem bei der Pyrolyse entstehenden Pyrolysedampf abgeschieden werden. Die Mengenanteile und Zusammensetzungen sind dabei abhängig von dem Ursprungsmaterial, der Pyrolysetemperatur, den Druckverhältnissen und der Reaktionsdauer. Bei der Pyrolyse von Polymeren entsteht häufig ein zugehöriges Monomer als Teil des Pyrolysedampfes.

Vorrichtungen und Verfahren zur Pyrolyse organischer Ausgangsstoffe sind grundsätzlich bekannt.

Beispielsweise ist aus der Veröffentlichung EP 0 592 057 B1 ein Verfahren zur Pyrolyse von Altreifen bekannt, bei dem die Altreifen einer Pyrolyse in einem Metallbad unter reduziertem Druck und unter Luft- und Wasserausschluss zersetzt werden. Der bei der Pyrolyse entstehende Pyrolysedampf wird nach einem Abkühlen in eine gasförmige oder eine flüssige Phase getrennt. Das Verfahren sieht weiter vor, dass ein Teil der gasförmigen Phase anschließend wieder in den Reaktorraum über dem Metallbad zurückgeführt wird und außerdem kontinuierlich Stickstoff in den Reaktorraum über dem Metallbad eingeleitet wird. Bei dem aus dieser Veröffentlichung bekannten Verfahren wird die Pyrolysereaktion vor allem durch ein Steuern der Geschwindigkeit des Gasstromes im Reaktionsraum kontrolliert.

EP 1 277 789 offenbart eine Vorrichtung und ein Verfahren zur Aufbereitung von Metall enthaltenden organischen Abfallstoffen. DE 102 12 105 offenbart ein Verfahren und eine Vorrichtung zur Pyrolyse von Abfall mit organischen Bestandteilen. Es ist ein der vorliegenden Erfindung zugrunde liegendes technisches Problem, eine verbesserte Vorrichtung zur kontinuierlichen Pyrolyse organischer Ausgangsstoffe vorzuschlagen.

Gemäß einem ersten Aspekt der vorliegenden Erfindung wird das technische Problem gelöst für eine Vorrichtung zur kontinuierlichen Pyrolyse organischer Ausgangsstoffe, die die folgenden Komponenten umfasst:
- einen Pyrolysereaktor mit einem Träger, wobei der Pyrolysereaktor ausgebildet ist, die organischen Ausgangsstoffe mittels des Trägers aufzunehmen und zum Zersetzen derselben diese durch eine in einer Wanne befindliche Metallschmelze einer Temperatur von 400°C bis 700°C zu befördern;
- eine mit dem Pyrolysereaktor verbundene Kondensationsvorrichtung, die ausgebildet ist, während der Pyrolyse entstehende Pyrolysedämpfe aufzunehmen sowie diese in eine gasförmige Phase und in eine flüssige Phase zu überführen;
- einen mit dem Pyrolysereaktor verbundenen Entgaser zur Aufnahme von Feststoffen aus der Metallschmelze und zur Desorption von Kohlenwasserstoffen, der ausgebildet ist, die Feststoffe zu zerkleinern und an diesen haftendes Metall der Metallschmelze zu lösen und zu sammeln;
- eine Metallrückführung, die zum Rückführen des von dem Entgaser gelösten und gesammelten Metalls in die Metallschmelze des Pyrolysereaktors ausgebildet ist und zwischen der Wanne für die Metallschmelze und dem Entgaser angeordnet ist;
- einen mit dem Entgaser verbundenen Kühler, der ausgebildet ist, die zerkleinerten und gereinigten Feststoffe aufzunehmen und zu kühlen sowie als Pyrolysefeststoffe bereitzustellen, sowie
- ein Gasrückführungssystem, das ausgebildet ist, durch die Kondensationsvorrichtung erzeugtes Pyrolysegas zumindest teilweise dem Reaktorraum zuzuführen.
Die vorliegende Erfindung beruht auf der Erkenntnis, dass es zum Sicherstellen eines kontinuierlichen Betriebes der Pyrolysevorrichtung vorteilhaft ist, wenn ein Nachbefüllen der Metallschmelze, die im Folgenden auch als Metallbad bezeichnet ist, in ökonomischer Weise erfolgt. Die organischen Ausgangsstoffe, die mittels des Trägers durch die Metallschmelze befördert werden, tragen nämlich jeweils einen Teil des Metalls aus der Metallschmelze, so dass Metall nachgeführt werden muss, um einen gewissen Pegelstand der Metallschmelze sicher zu stellen.

Ein Vorteil der vorliegenden Erfindung ist, dass die Wanne zum Nachbefüllen nicht aus dem Reaktor befördert werden muss, sondern dass ihr mittels der Metallrückführung nachhaltig Metall hinzugefügt wird. Das im Entgaser abgeschiedene Metall ist dem Pyrolyseprozess zurückgeführt. Durch den so realisierten Kreislauf bleibt das Metall der Metallschmelze dem Prozess erhalten.

Durch die Metallrückführung gelingt folglich ein in verfahrenstechnischer und materieller Hinsicht ökonomisches Nachbefüllen der Metallschmelze.

Durch das während des Betriebes der Vorrichtung vollzogene Rückführen des Metalls in die Metallschmelze wird außerdem ein Strömen in der Metallschmelze aufrechterhalten, was einer homogenen Wärmeverteilung förderlich ist und einem Entstehen unvorteilhaft hoher, da möglicherweise materialschädigende, Temperaturgradienten entgegenwirkt.

Die Metallrückführung umfasst bevorzugt eine Öffnung, die derart gestaltet ist, dass über diese Metall in fester oder flüssiger Form von extern her eingetragen werden kann, beispielsweise zum Erstbefüllen der Wanne.

Die Metallrückführung umfasst ferner bevorzugt Mittel zum Heizen des rückgeführten Metalls, bevorzugt auf eine Temperatur, die in etwa der Temperatur der Metallschmelze entspricht. Auf diese Weise ist sichergestellt, dass das nachgefüllte Metall keine unerwünschten Temperaturänderungen in der Metallschmelze verursacht.

Die organischen Ausgangsstoffe sind beispielsweise zerkleinerte Altreifen, Kohlenstofffaserverbundstoffe, Glasfaserverbundwerkstoffe, Duroplaste, Altgummis, Epoxidharze, Phenolharze. Die Ausgangsstoffe gelangen beispielsweise über eine Eingangsschleuse auf den Träger. Bevorzugt umfasst die erfindungsgemäße Vorrichtung ferner Mittel zum Spülen der Ausgangsstoffe in der Eingangsschleuse mit einem Inertgas, wie beispielsweise Stickstoff, Kohlenstoffdioxid oder ein Edelgas. Dies hat den Vorteil, dass die Ausgangsstoffe mit Eintritt in den Reaktorraum über der Metallschmelze kein signifikantes Erhöhen des Sauerstoffanteils im Reaktorraum über der Metallschmelze verursachen. Die Metallschmelze ist beispielsweise ein Zinnbad, das eine Temperatur von etwa 420°C bis 550°C trägt und damit flüssiges Zinn enthält. Der Gasdruck im Reaktor beträgt bevorzugt 20 bis 100 mbar über dem Druck der äußeren Umgebung.

Der Träger ist bevorzugt als Trägerband ähnlich einer Kette einer Pistenraupe mit einer Vielzahl durch senkrecht zum Band stehender Profile getrennte Kettensegmente ausgebildet. Das Trägerband ist umlaufend und besitzt einen oberen Teil, der bei einer ersten Umlenkung in einen unteren Teil übergeht. Der obere Teil des Trägerbandes befindet sich außerhalb der Metallschmelze und der rücklaufende und untere Teil des Trägerbandes befindet sich innerhalb der Metallschmelze und geht bei einer zweiten Umlenkung in den oberen Teil über. Die organischen Ausgangsstoffe werden im Folgenden auch als Pyrolysegut bezeichnet.

An der ersten Umlenkung des Trägerbandes ist bevorzugt ein Umlaufblech angeordnet, das derart ausgestaltet ist, dass es ein Herausfallen der Ausgangsstoffe verhindert. Durch das Trägerband ist sichergestellt, dass die Ausgangsstoffe, die in der Regel eine geringere Dichte als die Metallschmelze aufweisen, während einer bestimmten Zeitspanne tatsächlich vollständig von der Metallschmelze umgeben sind.

Zum Erhalten der Reinheit der Metallschmelze sind in einer bevorzugten Ausführungsform im Pyrolysereaktor - und dort vorzugsweise direkt am Träger befestigte - Putzerelemente zum Aufnehmen und Entfernen in und auf der Metallschmelze schwimmender Feststoffe vorgesehen.

Während der Pyrolyse entstehende Pyrolysedämpfe werden der Kondensationsvorrichtung zugeführt, die ausgebildet ist, diese in eine gasförmige Phase und in eine flüssige Phase zu überführen, also in ein Pyrolysegas und in ein Pyrolyseöl.

Die von der Metallschmelze nicht zersetzten Feststoffe der Ausgangsstoffe werden vom Träger zu einem Austragschacht des Pyrolysereaktors befördert, der mit dem Entgaser verbunden ist. Der Entgaser nimmt diese Feststoffe auf und scheidet das an ihnen haftende Metall der Metallschmelze ab und führt das gesammelte und noch flüssige Metall der Metallrückführung zu.

Der Austragsschacht umfasst bevorzugt ein beispielsweise als Schieber ausgebildetes Absperrorgan, so dass die Prozessräume, also Reaktorraum und Entgaserraum im Bedarfsfall voneinander getrennt werden können.

In dem Entgaser herrscht bevorzugt eine Temperatur etwa 10°C bis 40°C über dem Temperaturniveau der Metallschmelze. Ein derartiges Temperaturniveau im Entgaser fördert ein Verdampfen der von den Feststoffen möglicherweise absorbierten Kohlenwasserstoffe, welche beim Nichtentfernen zu Geruchsproblemen und damit zu einer möglichen Einschränkung ihrer weiteren Verwendungsmöglichkeiten führen könnten.

Die den Pyrolysereaktor verlassenden Feststoffe gelangen bevorzugt direkt nach ihrem Bad in der Metallschmelze im freien Fall zum Entgaser. Auf diese Weise werden Anbackungen von Feststoffen und/oder Verstopfungen im den Pyrolysereaktor und den Entgaser verbindenden Austragsschacht vermieden. Ein solcher Schacht ist bevorzugt so dimensioniert, dass er eine selbe oder eine größere Breite hat wie der Träger im Pyrolysereaktor.

Durch das Zerkleinern der Feststoffe im Entgaser können die Feststoffe in ihre einzelnen Bestandteile separiert werden, beispielsweise in Koks, Stahldrähte, Textilien, sowie das an ihnen haftende Metall abgeschieden werden. Nicht nur die erhöhte Temperatur im Entgaser, sondern auch das Zerkleinern der Feststoffe und die damit einhergehende Vergrößerung der Oberfläche fördert die Desorption der gegebenenfalls vorhandenen aromatischen Kohlenwasserstoffreste.

Zum Einbringen der für das Verdampfen der Kohlenwasserstoffreste notwendigen Verdampfungsenthalpie sind an Wandungen des Entgasers bevorzugt elektrische Flächenheizer angebracht.

Um den Verdampfungsprozess im Entgaser aufrecht zu erhalten, ist dem Entgaser während des Betriebes ein Gas, bevorzugt vorerhitztes Pyrolysegas, zugeführt, das dem Austrag der verdampften Anteile der Feststoffe aus dem Entgaser dient. Hierfür können aber auch bei bestimmten Festoffen andere Gase wie zum Beispiel Kohlendioxid, Stickstoff oder Wasserdampf vorteilhaft sein. Dieser Gasstrom, der im Folgenden auch als Trocknungsgasstrom bezeichnet wird, ist bevorzugt so bemessen, dass das zugeführte Gas das Volumen des Entgaserraumes etwa einmal in 10 bis 15 min austauscht und der Druck im Pyrolysereaktor und im Entgaser von etwa 20 bis 100 mbar über dem Druck der äußeren Umgebung eingehalten wird. Über den Austragsschacht gelangt der Trocknungsgasstrom in den Pyrolysereaktorraum und von dort aus ebenfalls zur Kondensationsvorrichtung.

Ist beispielsweise eine Verwendung des erzeugten und aufbereiteten Pyrolysekokses als verstärkender Füllstoff für Gummimischungen vorgesehen, ist in manchen Ausführungsformen eine Verwendung von Wasserdampf oder Kohlendioxid vorteilhaft.

Entgaser und Metallführung sind in einer bevorzugten Ausführungsform derart ausgestaltet, dass im Bedarfsfall die gesamte Metallschmelze der Wanne im Entgaser und/oder in der Metallführung im flüssigen Zustand gelagert werden kann.

Der Entgaser umfasst bevorzugt Einbauten zum Befördern der zerkleinerten und gereinigten Feststoffe hin zum Kühler. Der Kühler ist ausgebildet, diese zu kühlen, beispielsweise auf eine Temperatur von unter 80°C, und in einer Ausführungsform über eine Ausgangsschleuse diese als Pyrolysefeststoffe bereitzustellen.

Der Kühler ist mit dem Entgaser bevorzugt über einen zweiten Austragsschacht umfassend einen Schieber verbunden, der sicherstellt, dass der Prozessraum des Entgasers und der Prozessraum des Kühlers grundsätzlich, d.h. dann, wenn kein Materialübertrag vom Entgaser zum Kühler erfolgt, voneinander getrennt sind.

Durch das Zusammenwirken von Pyrolysereaktor, Entgaser, Metallrückführung und Kühler gelingt es zum einen, einen kontinuierlichen Pyrolysevorgang aufrechtzuerhalten und zum anderen, nicht nur Pyrolysegase sondern auch Pyrolysefeststoffe kontinuierlich zu konditionieren, d.h. derart vorzubereiten, dass sie Eingangsbedingungen, wie beispielsweise eine bestimmte Temperatur und/oder Stückigkeit, nachgelagerter Prozesse genügen.

Nachfolgend werden weitere Ausführungsbeispiele der Erfindung beschrieben. Die zusätzlichen Merkmale der weiteren Ausführungsbeispiele können, wie bereits oben beschriebene optionale Merkmale auch, zum Bilden anderer Ausführungsformen miteinander kombiniert werden, sofern sie nicht ausdrücklich als alternativ zueinander beschrieben sind.

In einer bevorzugten Ausführungsform ist die Metallrückführung ausgebildet, einen Pegelstand der in der Wanne befindlichen Metallschmelze zu regeln.

Sollte das von dem Entgaser abgeschiedene und gesammelte Metall nicht ausreichen, um einen Mindestpegel in der Wanne zu halten, so wird der Metallrückführung über eine dafür ausgelegte Öffnung zusätzliches Metall von extern her zugeführt, wahlweise manuell oder über eine dafür ausgelegte Einrichtung. Bevorzugt umfasst die Metallrückführung dafür ein beheizbares Depot, das zum einen mit dem Entgaser verbunden ist, beispielsweise über ein Siphon, und zum anderen besagte Öffnung aufweist. Das von extern her zugeführte Metall kann dann auch in einem festen Zustand der Metallrückführung zugeführt werden.

In einer besonders bevorzugten Ausführungsform ist der Entgaser unterhalb des Pyrolysereaktors und geneigt angeordnet. Diese Ausführungsform birgt mehrere Vorteile: Zum einen sammelt sich das von dem Entgaser abgeschiedene Metall selbständig in einer Senke der Entgasers. Diese Senke ist dann bevorzugt mit der Metallrückführung verbunden, beispielsweise über ein Siphon. Zum anderen ist zum Befördern der Feststoffe vom Pyrolysereaktor zum Entgaser keine weitere Transportvorrichtung, wie beispielsweise eine Pumpe oder eine andere Hebevorrichtung, notwendig. Pyrolysereaktor und Entgaser sind bevorzugt so zueinander angeordnet, dass die Feststoffe über einen Austragschacht im freien Fall vom Pyrolysereaktor zum Entgaser gelangen.

Der den Pyrolysereaktor und den Entgaser verbindenden Austragschacht umfasst bevorzugt einen Schieber, der im Bedarfsfall ein Trennen der beiden Prozessräume erlaubt. Der Entgaser ist bevorzugt gegenüber der Waagerechten um etwa 5° bis 40° geneigt, bevorzugt um 15 Grad.

Einen realisierbaren Erfindungsgedanken stellt eine Ausführungsform dar, bei der der Entgaser unterhalb des Pyrolysereaktors und der Kühler unterhalb des Entgasers angeordnet sind. In dieser Ausführungsform erfolgt der Materialtransport zwischen den jeweiligen Komponenten der erfindungsgemäßen Vorrichtung mittels Schwerkraft, also im freien Fall. Dies hat zum einen den Vorteil, dass keine Mittel zum Befördern des Materials, also zum Befördern der Feststoffe vom Pyrolysereaktor hin zum Entgaser und vom Entgaser hin zum Kühler, bereitgestellt werden müssen, was in einem kompakten Aufbau der Vorrichtung resultiert, und zum anderen, dass ein Anhaften der Feststoffe und/oder ein Verstopfen auf den jeweiligen Transportwegen vermieden wird.

Einen weiteren und unabhängig von der relativen Anordnung von Pyrolysereaktor, Entgaser und Kühler realisierbaren Erfindungsgedanken stellt eine Ausführungsform dar, bei der der Pyrolysereaktor austragsseitig und der Entgaser eintragsseitig starr mit einem Bodenfundament verbunden sind. Ferner sind in dieser Ausführungsform der Pyrolysereaktor, der Entgaser und der Kühler im Übrigen derart gelagert, dass diese jeweils in beide Richtungen mindestens einer Raumachse relativ zum Bodenfundament beweglich sind. Auf diese Weise wird einer möglichen Änderung der geometrischen Abmessungen des Pyrolysereaktors, des Entgasers und des Kühlers auf Grund einer Veränderung der Temperatur Rechnung getragen. Beispielsweise sind der Pyrolysereaktor und der Entgaser über einen Austragsschacht starr miteinander verbunden und auf der jeweils anderen Seite in Längsrichtung beweglich gelagert, beispielsweise auf einem Rollen- oder Gleitlager.

In einer weiteren bevorzugten Ausführungsform weist/weisen der Entgaser und/oder der Kühler eine Welle mit einer Vielzahl Paddel auf und ist/sind ausgebildet, zum Transport der Feststoffe eine alternierend rechtdrehende und linksdrehende Rotation der Welle zu veranlassen, wobei die Rotation in eine Richtung einen weiteren Transport der Feststoffe verursacht als die Rotation der anderen Richtung. Auf diese Weise ist weitestgehend sichergestellt, dass zum einen die Feststoffe zerteilt und durchmischt werden und zum anderen, dass es innerhalb des Entgaser bzw. des Kühlers zu keinen Verstopfungen durch ein Anhäufen von Feststoffen, wie beispielsweise Stahlwolle, kommt. Damit wird ein im Wesentlichen gleichmäßiger Feststoffstrom im Entgaser und/oder im Kühler erzielt.

Einen ebenfalls realisierbaren Erfindungsgedanken stellt eine Ausführungsform dar, bei der der Entgaser und/oder der Kühler Mittel zum temporären Stauen der Feststoffe im Entgaser / im Kühler aufweist/aufweisen und ausgebildet ist/sind, die temporär gestauten Feststoffe durch ein getaktetes Überheben zu einem Feststoffaustrag des Entgasers / des Kühlers auszugeben. Auf diese Weise kann sichergestellt werden, dass ein im Feststoffaustrag des Entgasers / des Kühlers befindlicher Schieber nicht mit Feststoffen beaufschlagt wird, sondern vor dem Überheben der temporär gestauten Feststoffe geöffnet werden kann.

In einer bevorzugten Ausführungsform umfasst der Entgaser beispielsweise eine am Boden angeordnete Barriere. An der Barriere sammeln sich die zerkleinerten Feststoffe. Zum anderen verhindert die Barriere, dass vom Entgaser abgeschiedenes flüssiges Metall den Ort, an dem die Barriere angeordnet ist, überschreitet. Wie bereits oben erläutert, sind der Entgaser und der Kühler bevorzugt über einen zweiten Austragsschacht umfassend einen Schieber miteinander verbunden. An einer zweiten Welle des Entgasers ist bevorzugt außerdem ein Heber angeordnet, der in gewissen Abständen die an der Barriere temporär gestauten Feststoffe über die Barriere hebt und in den zweiten Austragsschacht befördert. Betätigung des Schiebers des zweiten Austragsschachtes und Heben der Feststoffe über die Barriere in den zweiten Austragsschacht sind bevorzugt getaktet, und zwar bevorzugt derart, dass der Schieber nicht mit Feststoffen beaufschlagt wird, sondern der Heber nur dann an der Barriere angesammelte Feststoffe in den zweiten Austragsschacht befördert, wenn dieser durch entsprechende Stellung des Schiebers geöffnet ist. Im Wesentlichen unmittelbar nachdem die Feststoffe den zweiten Austragschacht verlassen haben, schließt der Schieber den zweiten Austragsschacht und trennt somit wieder Entgaserraum vom Kühlerraum.

Die oben beschriebenen Ausführungsformen des Entgasers und des Kühlers steilen ebenfalls realisierbare Erfindungsgedanken dar. Gleichwohl wirken sie sich positiv, insbesondere in Zusammenhang mit der Metallrückführung, auf einen kontinuierlichen Betrieb der erfindungsgemäßen Vorrichtung zur Pyrolyse organischer Ausgangsstoffe aus.

In einer besonders bevorzugten Ausführungsform umfasst der Pyrolysereaktor zum Erhitzen der Metallschmelze eine Vielzahl austauschbarer Heizelemente mit jeweils mindestens einem Heizstab. Die Heizelemente sind ausgebildet, der Metallschmelze den für die Pyrolysereaktionsenthalpie notwendigen Wärmemengenstrom zukommen zu lassen. Durch die Vielzahl Heizstäbe ist eine besonders hohe Heizoberfläche geschaffen, die einem hohen Wärmestrom dienlich ist. Die Reaktionsgeschwindigkeit ist nämlich nach Erkenntnis der Erfinder weniger von der Konzentration des Pyrolyseguts in der Metallschmelze als vielmehr durch die Menge der übertragenen Wärme bestimmt. Die Metallschmelze fungiert also unter anderem im Sinne eines Wärmeübertragungsmediums zwischen Heizstab und Pyrolysegut. Die austauschbaren Heizelemente können insbesondere während des Betriebes der erfindungsgemäßen Vorrichtung ausgewechselt werden, was einem kontinuierlichen Betrieb selbstredend dienlich ist. Dabei bildet das Metallbad selbst eine gasdichte Durchführung, die den Luftzutritt in den Reaktorraum verhindert.

Die Heizstäbe sind bevorzugt so angeordnet, dass diese direkt in der Metallschmelze hineinragen, so dass die von ihnen erzeugte Wärme nicht die Wannenwand durchdringen muss.

Der Abstand der Heizstäbe zum Pyrolysegut, d. h. zu den in der Metallschmelze befindlichen Ausgangsstoffen, ist bevorzugt gering gewählt, beispielsweise beträgt dieser 50 mm. Auf diese Weise kann die Oberflächentemperatur der Vielzahl Heizstäbe vergleichsweise gering gehalten werden, so dass ein Durchbrennen von Heizdrähten im Inneren der Heizstäbe und eine damit einhergehende Verringerung der Lebensdauer der Heizstäbe weitestgehend vermieden werden.

In einer Ausführungsform bringen die Heizstäbe eine Leistung von etwa 500 kW in die Metallschmelze ein. Ein jeweiliger Heizstab gibt zum Erreichen einer langen Lebensdauer über seine Heizoberfläche bevorzugt nicht mehr als 10 W/cm² ab, beispielsweise 2 bis 6 W/cm².

Ist der Träger als Trägerband oder ähnliches ausgebildet, so ist in der Wanne bevorzugt zwischen Heizstäben und Trägerband ein Zwischenboden installiert, so dass das Trägerband im Falle eines Durchhängens nicht mit den Heizstäben in Kontakt gerät. Das Material des Zwischenbodens, beispielsweise ein rostfreier Edelstahl, ist bevorzugt so gewählt und ausgelegt, dass dieser keinen nennenswerten Wärmeleitwiderstand bildet.

Dadurch, dass eines der Vielzahl Heizelemente während des laufenden Betriebes des Pyrolysereaktors ausgetauscht werden kann, ist die Wartbarkeit und Instandhaltung der erfindungsgemäßen Vorrichtung verbessert.

Die oben beschriebenen Ausführungsformen des Pyrolysereaktors mit der Vielzahl austauschbarer Heizelemente stellen ebenfalls realisierbare Erfindungsgedanken dar. Gleichwohl wirkt sich, wie beschrieben, der Pyrolysereaktor mit der Vielzahl austauschbarer Heizelemente positiv, insbesondere in Zusammenhang mit der Metallrückführung, auf einen kontinuierlichen Betrieb der erfindungsgemäßen Vorrichtung zur Pyrolyse organischer Ausgangsstoffe aus.

In einer weiteren bevorzugten Ausführungsform sind in der Wanne Mittel zum Aufrechterhalten einer Strömung, beispielsweise eine Umlaufpumpe, innerhalb der Metallschmelze vorgesehen. Durch die konvektive Strömung in der Metallschmelze wird einerseits die Wärmeübertragung in der Metallschmelze verbessert und andererseits eine Entstehung hoher, möglicherweise materialschädigender Temperaturgradienten vermieden. Bevorzugt ist die Metallrückführung derart gestaltet, dass eine konvektive Strömung in der Metallschmelze bereits durch einen Metalleinlauf, beispielsweise einen Doppeleinlauf links und rechts der Vielzahl Heizelement, der Metallrückführung realisiert wird. Über diesen Metalleinlauf gelangt das von Entgaser abgeschiedene und gesammelte Metall wieder in die Metallschmelze.

Bevorzugt weist ein jeweiliger Heizstab die Form eines großgeschriebenen "L" auf. Zum Einführen der Heizelemente in die Metallschmelze werden diese zunächst so ausgerichtet, dass der Heizstab parallel zu einer Längsseite der Wanne liegt, sodann abgesenkt und in der Wanne um etwa 90° gedreht, so dass der Heizstab weit unterhalb des beispielsweise als Trägerband ausgebildeten Trägers reicht.

In einer weiteren bevorzugten Ausführungsform umfasst der Pyrolysereaktor zusätzlich eine über der Wanne angeordnete Haube. Die Haube reduziert den Raum, den die Pyrolysedämpfe einnehmen können. Die Haube ist bevorzugt so angeordnet, dass ihre Umfassung einige Millimeter in die Metallschmelze hineinragt.

Die Vorrichtung zur Pyrolyse von Ausgangsstoffen umfasst ein Gasrückführungssystem, das ausgebildet ist, durch die Kondensationsvorrichtung erzeugtes Pyrolysegas dem Reaktorraum zuzuführen. Vorteilhafterweise ist das Gasrückführungssystem mit einem Gaszwischenspeicher und einem Druckregelventil ausgestattet. Damit kann der Gasdruck im Pyrolysereaktor geregelt werden.

Insbesondere in der Ausführungsform mit einem Gasrückführungssystem umfasst die Haube über der Metallschmelze bevorzugt einen Einlassstutzen und einen Auslassstutzen, wobei das rückgeführte Pyrolysegas dem Raum unterhalb der Haube über den Einlassstutzen zugeführt ist und einem Spülen des Raumes unterhalb der Haube dient und der während der Pyrolyse erzeugte Pyrolysedampf über den Auslassstutzen der Kondensationsvorrichtung zugeführt ist. Auf diese Weise wird ein schnelles und gerichtetes Abführen der Pyrolysedämpfe erzielt und damit ein Polymerisieren bzw. Rekombinationsreaktionen weitestgehend vermieden. Durch andauernde Erwärmung der Pyrolysedämpfe, beispielsweise hervorgerufen durch Kontakt mit der Oberfläche der Metallschmelze und/oder durch Reaktoreinbauten, käme es unter Umständen vermehrt zu Rekombinationsreaktionen und damit zu Ablagerungen von hoch kondensierten polyaromatischen Kohlenwasserstoffen und Polymerisaten, wie beispielsweise koksartige und/oder asphaltartige Ablagerungen.

Die Pyrolysedämpfe neigen auch aufgrund des ungesättigten Bindungscharakters der oligemeren oder monomeren Kohlenwasserstoffmoleküle zum Polymerisieren bzw. zu Rekombinationsreaktionen, was, wie soeben beschrieben, nachteilig ist, da dadurch Ablagerungen sowohl im Reaktorinnenraum als auch in Rohrleitungen, die die Kondensationsvorrichtung mit dem Pyrolysereaktor verbinden, entstehen können.

In diesem Sinne sind auch die Durchmesser von Rohrleitungen der erfindungsgemäßen Vorrichtung, insbesondere einer Rohrleitung, die den Pyrolysereaktor mit der Kondensationsvorrichtung verbindet, so bemessen, dass darin befindliches Gas laminar strömen kann und der Wärmeübergang damit gering gehalten wird. Auf diese Weise werden Rekombinationen und damit einhergehende Ablagerungen vermieden. Selbstredend wären Ablagerungen in den Rohrleitungen und/oder im Reaktorraum auf Dauer ungünstig, da diese den Betrieb der Vorrichtung einschränken könnten. Bevorzugt umfasst die erfindungsgemäße Vorrichtung daher auch Mittel zum Beheizen der Rohrleitungen. Auch aus diesem Grund ist die Kondensationsvorrichtung bevorzugt in unmittelbarer Nähe zum Pyrolysereaktor angeordnet, damit verbindende Rohrleitung möglichst kurz ausfallen.

Durch das Rückführen des Pyrolysegases in den Reaktorraum oder, wenn die Haube vorgesehen ist, in den Raum unterhalb der Haube kann die Verweilzeit der Pyrolysedämpfe im Reaktorraum gesteuert werden. Der Strom des in den Reaktorraum bzw. in den Raum unterhalb der Haube zurückgeführten Pyrolysegases ist damit bevorzugt so bemessen, dass die Pyrolysedämpfe nicht länger als einige Sekunden im Pyrolysereaktor verweilen, beispielsweise nicht länger als 10 Sekunden.

Der Einlaufstutzen der Haube führt von der Außenwand der Haube bevorzugt zu einem Diffusor in der Haube, der gewährleistet, dass der Raum unterhalb der Haube im Wesentlichen räumlich gleichverteilt mit Pyrolysegas gespült wird. Der Diffusor erstreckt sich beispielsweise über die gesamte Länge der Haube und umfasst für das Spülen eine Vielzahl Auslasslöcher, so dass sich das einströmende Pyrolysegas möglichst gleichmäßig im Raum unterhalb der Haube verteilt.

Der Auslaufstutzen zum Abführen des Pyrolysedampfes hin zur Kondensationsvorrichtung ragt bevorzugt durch ein die Haube tragendes Gestell einige Zentimeter in einen Verbindungsstutzen hinein, der zur Kondensationsvorrichtung führt. Der Verbindungstutzen grenzt nicht direkt an das Gestell für die Haube, sondern ist bevorzugt um eine bestimmte Distanz von diesem beabstandet. Dadurch entsteht ein zusätzlicher Einlauf, der insbesondere einem Abführen der Gase oberhalb der Haube hin zur Kondensationsvorrichtung dient. Wie bereits weiter oben ausgeführt, strömt der Trocknungsgasstrom, beispielsweise vorerhitztes Pyrolysegas, Wasserdampf, Kohlendioxid oder Stickstoff, gegen die Feststofftransportrichtung im Entgaser durch den Austragsschacht in den Pyrolysereaktorraum, und zwar zum größeren Teil in den Raum über der Haube. Dieser Gasstrom strömt sodann über den Einlauf hin zur Kondensationsvorrichtung.

Alle oben beschriebenen Ausführungsformen der Haube stellen ebenfalls realisierbare Erfindungsgedanken dar. Gleichwohl wirkt sich, wie beschrieben, die Installation einer solchen Haube positiv auf einen kontinuierlichen Betrieb der erfindungsgemäßen Vorrichtung zur Pyrolyse organischer Ausgangsstoffe aus.

Der Pyrolysereaktor ist bevorzugt durch eine Vielzahl Schweißnähte abgedichtet. Nach Erkenntnis der Erfinder ist diese Variante anderen Dichtungsmöglichkeiten, wie beispielsweise Verschraubungen mit Dichtringen, überlegen.

Vor diesem Hintergrund weist der Pyrolysereaktor zum Einlagern und Auslagern der Wanne bevorzugt ein Wandstück auf, dass an eine Wandaufnahme der Pyrolysereaktorwandung lösbar angeschweißt ist, wobei sowohl das Wandstück als auch die Wandaufnahme im Wesentlichen parallel angeordnete Kontaktflächen aufweisen, die im Sinne eines Opferkragens wirken. In bestimmten Fällen muss die Wanne eingelagert werden bzw. ausgelagert werden, beispielsweise bei der Installation oder zum Austauschen. Mit jedem Öffnen der Schweißnaht wird unter Umständen ein wenig Material abgetragen, so dass sich die als Opferkragen wirkenden Kontaktflächen als zweckmäßig erweisen.

Einen ebenfalls realisierbaren Erfindungsgedanken stellt eine Ausführungsform dar, bei der der Kühler mit dem Entgaser über einen zweiten Austragsschacht umfassend einen Schieber verbunden ist und eine Ausgangsschleuse zur Ausgabe der Pyrolysefeststoffe umfasst sowie ausgebildet ist, den Schieber des zweiten Austragsschachtes und die Ausgangsschleuse zeitlich versetzt zu betreiben, so dass der zweite Austragsschacht und die Ausgangsschleuse nicht gleichzeitig in einem geöffneten Zustand sind. Dies erhöht die Stabilität der Prozessparameter, wie beispielsweise Temperatur und Gasdruck, im Entgaser und im Trockner.

In einer anderen bevorzugten Ausführungsform bildet der Kühler selbst eine Ausgangsschleuse der erfindungsgemäßen Vorrichtung. Diese Ausführungsform bietet sich insbesondere dann an, wenn der Materialdurchsatz vergleichsweise gering ist, beispielsweise 100 Kilogramm pro Stunde (100 kg/h). In dieser Ausführungsform weist der Kühler zum Ausgeben der Pyrolysefeststoffe anstelle der Ausgangsschleuse einen dritten Austragsschacht mit einem Schieber auf und ist ausgebildet, den Schieber des zweiten Austragsschachtes und den Schieber des dritten Austragschachtes zeitlich versetzt zu betreiben, so dass der zweite Austragsschacht und der dritte Austragsschacht nicht gleichzeitig in einem geöffneten Zustand sind.

Der Kühler ist in den oben beschriebenen beiden Ausführungsformen folglich taktmäßig an den Entgaser gekoppelt, da das Heben der an der Barriere des Entgasers gesammelten Feststoffe hin zum zweiten Austragsschacht nur dann erfolgt, wenn der zweite Austragsschacht durch entsprechende Stellung seines Schiebers geöffnet ist.

Wie bereits oben erläutert, ist die Metallschmelze bevorzugt als Zinnbad realisiert. Einen Vorteil von Zinn bildet sein vergleichsweise geringer Dampfdruck. Ein anderer Vorteil ist, dass Zinn den im freien Reaktorraum möglicherweise vorhandenen Sauerstoff bindet. Weitere bevorzugte und näher spezifizierte Metallschmelzen sind beispielsweise in der Veröffentlichung EP 0 592 057 B1 abgegeben.

Im Pyrolysereaktorgasraum herrscht bevorzugt ein leichter Überdruck, beispielsweise ein Überdruck bis 120 mbar, bevorzugt 50 mbar. Eine solche Bemessung des Gasdrucks erlaubt zum Einen einen vergleichsweise großen Gestaltungsspielraum bei der Konzeption des Reaktorgehäuses und zum anderen die Detektion etwaiger Leckagen, was der Sicherheit und der Wartbarkeit der erfindungsgemäßen Vorrichtung insgesamt erhöht. Außerdem wird durch den leichten Überdruck ein Entstehen explosionsfähiger Gemische im Reaktorraum sowie von Oxidationsprozessen vermieden. Oxidationsprozesse könnten nämlich zu einem Absenken des Kohlenstoffanteils bei bestimmten Ausgangsstoffen führen und damit die Qualität der Pyrolysefeststoffe mindern. Der Gasdruck im Pyrolysereaktor wird bevorzugt durch die Menge des in den Pyrolysereaktor zurückgeführten Pyrolysegases eingestellt.

Insgesamt ist die erfindungsgemäße Vorrichtung bevorzugt für eine Temperatur von bis zu 550°C und einem Gasdruck von etwa 1 bar bis 1,1 bar absolut ausgelegt. Diese Festlegung ermöglicht eine vergleichsweise kostengünstige und einfache Herstellung der Vorrichtung.

Der Gasdruck im Entgaser ist bevorzugt identisch mit dem Gasdruck im Pyrolysereaktor. Der Gasdruck im Kühler ist bevorzugt etwas höher als der Gasdruck im Entgaser und im Pyrolysereaktor, beispielsweise um 10 mbar. Damit der Gasdruck im Kühler gehalten werden kann, ist der Kühler bevorzugt über ein Druckregelventil mit einem Inertgasspeicher verbunden. Dem Kühler wird demnach beispielsweise dann Inertgas zugeführt, nachdem der Schieber im zweiten Austragsschacht geöffnet worden ist oder nachdem der Kühler zur Umgebung hin geöffnet worden ist.

Zum Steuern der Vorrichtung zur Pyrolyse organischer Ausgangsstoffe umfasst die Vorrichtung bevorzugt Mittel zum Erfassen des Gasdrucks im Pyrolysereaktor und Mittel zum Erfassen des Stromes des zurückgeführten Pyrolysegases. Der Gasdruck im Pyrolysereaktor ist bevorzugt über den Strom des zurückgeführten Pyrolysegases geregelt.

Weitere Vorteile der vorliegenden Erfindung werden mit der Beschreibung der folgenden Zeichnungen erläutert. Darin zeigen in schematischer Darstellung
- Figur 1:: eine bevorzugte Ausführungsform der erfindungsgemäßen Vorrichtung zur Pyrolyse organischer Ausgangsstoffe,
- Figur 2:: eine bevorzugte Ausführungsform des Pyrolysereaktors,
- Figur 3:: eine bevorzugte Anordnungsvariante von Pyrolysereaktor, Entgaser, Metallrückführung und Kühler,
- Figur 4:: eine zum Verschweißen bevorzugte Anordnung eines Wandstückes und einer Pyrolysereaktorumhausung,
- Figur 5:: eine bevorzugte Ausführungsform des Heizelementes,
- Figur 6:: eine Draufsicht der in Fig. 3 dargestellten bevorzugten Anordnungsvariante,
- Figur 7:: eine Draufsicht einer bevorzugten Ausführungsvariante der dem zügigen und gerichteten Austrag der Pyrolysedämpfe dienenden Haube,
- Figur 8:: eine bevorzugte Installation einer Ausführungsvariante der Haube im Pyrolysereaktorraum und
- Figur 9:: einen Querschnitt durch eine bevorzugte Ausführungsform des Pyrolysereaktors.

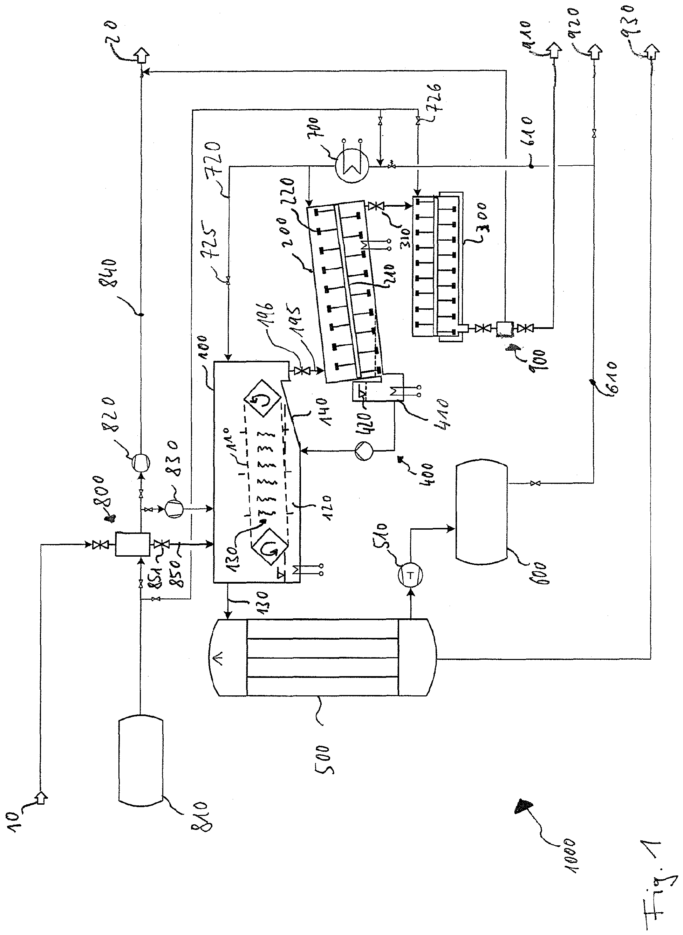

Fig. 1 zeigt in schematischer Darstellung den prinzipiellen Aufbau und die prinzipielle Anordnung der meisten Komponenten der Vorrichtung 1000 zur Pyrolyse organischer Ausgangsstoffe 10. Im Folgenden wird zunächst die prinzipielle Funktionsweise der Vorrichtung 1000 anhand Fig. 1 beschrieben. Anschließend wird näher auf die einzelnen Vorgänge in den jeweiligen Komponenten der Vorrichtung 1000 eingegangen. Die konstruktive Ausgestaltung einer jeweiligen Komponente der Vorrichtung 1000 sei sodann anhand der weiteren Figuren erläutert.

Die Ausgangsstoffe 10, wie beispielsweise zerstückelte Altreifen, sind einem Pyrolysereaktor 100 über eine Eingangsschleuse 800 zugeführt. Durch ein Trägerband 110 des Pyrolysereaktors 100 werden die Ausgangsstoffe 10 durch eine Metallschmelze 120 befördert. Dabei entstehende Pyrolysedämpfe 130 sind einer Kondensationsvorrichtung 500 zugeführt. In der Metallschmelze 120 verbleibende Feststoffe werden mittels des Trägerbandes 110 und einer dafür vorgesehenen Rampe 140 sowie einem Austragschacht 195 zu einem Entgaser 200 befördert. In dem Entgaser 200 erfolgt unter anderem ein Reinigen der Feststoffe. An den Feststoffen anhaftendes Metall wird abgeschieden und durch eine schräge Stellung des Entgasers 200 in einer Senke gesammelt. Ferner werden von den Feststoffen während der Pyrolyse absorbierte Kohlenwasserstoffe in einer sauerstofffreien Atmosphäre in dem Entgaser 200 entfernt.

Der Entgaser 200 hat eine mit Paddeln 220 versehene Welle 210, die durch rotierende Bewegung die Feststoffe mechanisch beansprucht und damit zerkleinert. Auf diese Weise werden die Feststoffe separiert. In dem Entgaser 200 abgesondertes Metall gelangt über eine Metallrückführung 400 zurück in die Metallschmelze 120. Die zerkleinerten Feststoffe werden von einem Kühler 300 abgekühlt, beispielsweise auf eine Temperatur unter 80°C und sodann über eine Ausgangsschleuse 900 als Pyrolysefeststoffe 910 ausgegeben.

In der Kondensationsvorrichtung 500 werden die Pyrolysedämpfe 130 in eine gasförmige und eine flüssige Phase getrennt. Der flüssige Teil wird, gegebenenfalls nach vorheriger Nachverarbeitung, als Pyrolyseöl 930 ausgegeben. Gewonnenes Pyrolysegas ist zunächst über einen Kompressor 510 einem Gaszwischenspeicher 600 zugeführt. Ein Teil 920 des Pyrolysegases wird ausgegeben, ein anderer Teil des Pyrolysegases wird, nach vorherigem Erhitzen in einem Gaserhitzer 700, sowohl dem Pyrolysereaktor 100 als auch dem Entgaser 200 zugeführt. Das Rückführen des Pyrolysegases 720 in den Pyrolysereaktor 100 dient einem gerichteten und schnellen Ableiten der bei der Pyrolyse entstehenden Pyrolysedämpfe 130. Auf diese Weise werden Rekombinationsreaktionen und ein Polymerisieren im Reaktorraum vermieden.

Die Eingangsschleuse 800, die beispielsweise als Doppelschieberschleuse ausgebildet ist, dient der Aufnahme der organischen Ausgangsstoffe 10, beispielsweise also zerkleinerte Altreifen, Kohlenstofffaserverbundstoffe, Glasfaserverbundwerkstoffe, Duroplaste, Altgummis, Epoxidharze, Phenolharze. Die organischen Ausgangsstoffe 10 haben beispielsweise eine Größe von etwa 6 cm x 6 cm x 1 cm. Die Vorrichtung 1000 zur Pyrolyse umfasst zusätzlich einen Inertgasbehälter 810, der beispielsweise mit gasförmigem Stickstoff gefüllt ist. Nach dem Öffnen der Eingangsschleuse zur Aufnahme der organischen Ausgangsstoffe 10 wird die Kammer der Eingangsschleuse 800 mit dem Stickstoff in Richtung der Umgebung, d.h. beispielsweise über eine erste Vakuumpumpe 820, gespült. Nach dem Öffnen der Schleusenkammer der Eingangsschleuse 800 in Richtung des Reaktorraums des Pyrolysereaktors 100 wird die Schleusenkammer ebenfalls mit dem Inertgas zum Reaktorraum hin gespült, d.h. beispielsweise über eine zweite Vakuumpumpe 830. Letztere Spülung erfolgt dabei in geringerem Maße als die erstere Spülung. Geringere Mengen Inertgas, beispielsweise 2% bis 8% Stickstoff, im Pyrolysedampf 130 sind tolerierbar. Durch das Reinigen der Schleusenkammer der Eingangsschleuse 800 mit einem Inertgas wird eine Verstopfung der Abgasleitung 840, beispielsweise verursacht durch Kondensatbildungen, weitestgehend vermieden. Durch konstruktive Detaillösungen im Reaktoreintrag 850, beispielsweise durch einen zeitlich getakteten Schieber 851, ist sichergestellt, dass das Trägerband 110 im angemessenen Maße mit den organischen Ausgangsstoffen 10 beschüttet wird.

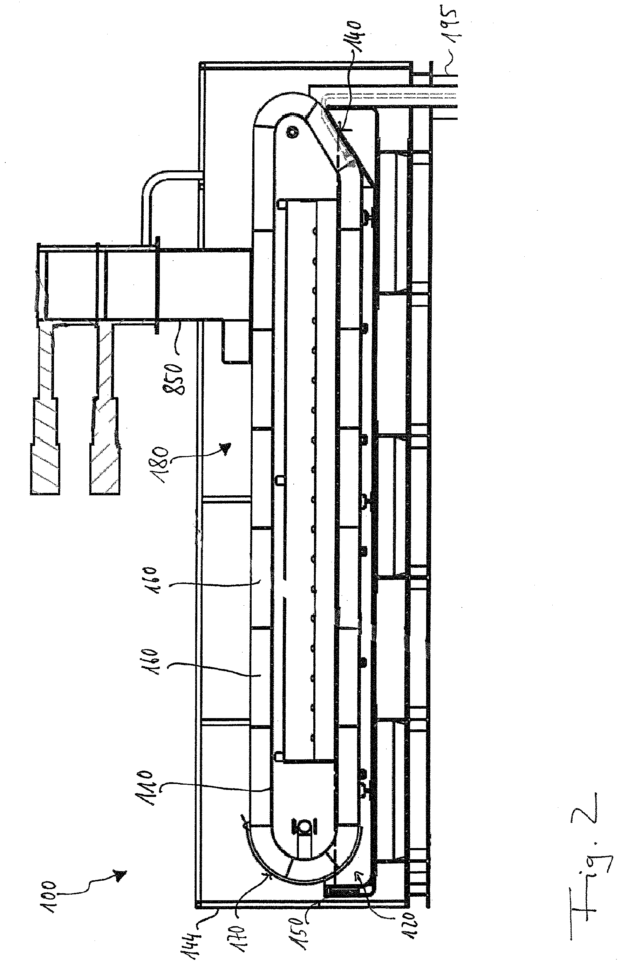

Eine in Fig. 2 näher dargestellte Ausführungsform des Pyrolysereaktors 100 umfasst eine Wanne 150 zum Fassen der Metallschmelze 120. Die Metallschmelze 120 ist bevorzugt durch ein Zinnbad realisiert. Zum Befördern der organischen Ausgangsstoffe 10 umfasst das Tägerband 110 eine Vielzahl Kettensegmente 160. Ferner ist ein Umlenkblech 170 vorgesehen, das sicherstellt, dass die Ausgangsstoffe 10 bei der ersten Umlenkung in ihrem jeweiligen Kettensegment 160 verbleiben. Aufgrund der geringeren Dichte der organischen Ausgangsstoffe 10 verbleiben diese auch während des Transportes durch die Metallschmelze 120 in ihrem jeweiligen Kettensegment 160. Die durch Eintauchen der organischen Ausgangsstoffe 10 in die etwa 480°C heiße Metallschmelze 120 initiierte Reaktion stellt eine endotherme Reaktion dar. Die Reaktionsgeschwindigkeit ist im Wesentlichen unabhängig von der Konzentration der Ausgangsstoffes in der Metallschmelze, sondern wird vor allem durch den die Menge der übertragenen Wärme von der Metallschmelze 120 hin zum Pyrolysegut 10 bestimmt. Die Metallschmelze 120 hat damit unter anderem die Funktion eines Wärmeübertragungsmediums hin zum Ort der Reaktion.

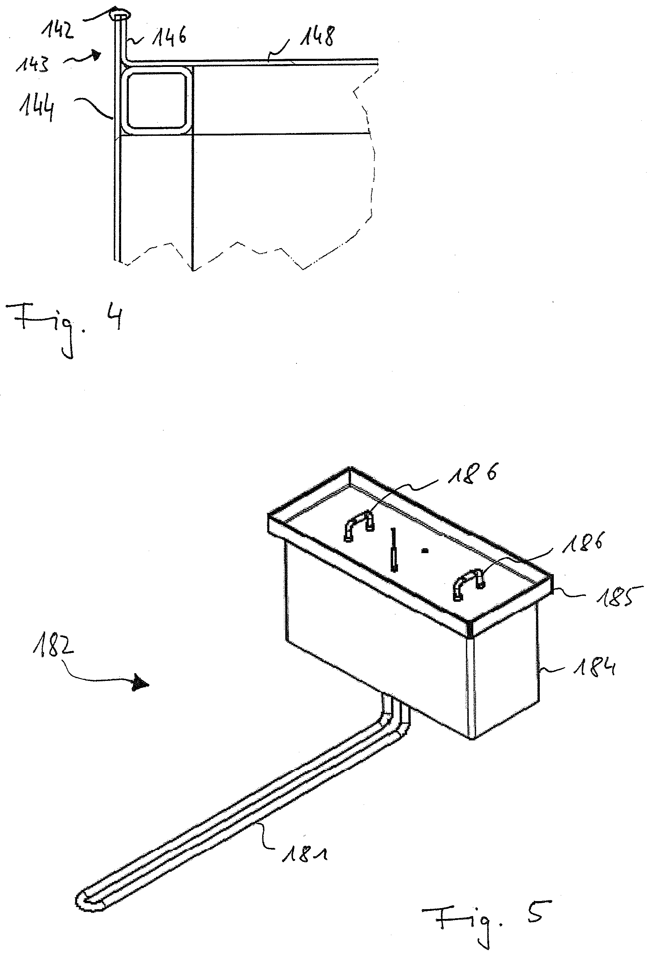

Durch ein in Fig. 5 näher dargestelltes Heizsystem ist sichergestellt, dass ein Temperaturgradient im Metallbad 120 zwischen einer Heizquelle und dem Pyrolysegut zum Aufrechterhalten der Reaktionstemperatur erhalten bleibt und damit einen für die Reaktionsenthalpie notwendigen Wärmemengenstrom bereitgestellt wird. Die Temperatur der Metallschmelze 120 liegt beispielsweise im Bereich von 400 bis 550°C, vorzugsweise im Bereich um 480°C.

Im freien Reaktorraum 180 besteht aus Sicherheitsgründen ein leichter Überdruck, beispielsweise von etwa 20 mbar bis 100 mbar. Eine solche Festlegung ermöglicht eine vergleichsweise kostengünstige und einfache Reaktorherstellung. Es hat sich herausgestellt, dass eine Pyrolyse im Unterdruckbereich oder im deutlichen Überdruckbereich sich nicht vorteilhaft auf die Reaktion oder die Pyrolyseprodukte auswirkt. Nach Erkenntnis der Erfinder ist der genaue Ort der Reaktion vor allem bestimmt durch den statischen Druck des Pegels des Metallbades 120; ein Verringern des Partialdruckes hat bei einem derartigen Reaktor keine für die Reaktionsgeschwindigkeit beschleunigende Wirkung noch einen positiven Einfluss auf die Qualität der Produkte. Der leichte Überdruck hingegen hat den Vorteil, dass ein Bilden explosionsfähiger Gemische im Reaktorraum 180 vermieden wird. Außerdem verhindert ein leichter Überdruck weitestgehend das Entstehen oxidativer Prozesse im Reaktorraum. Derartige oxidative Prozesse können beispielsweise zu einem Absinken des Kohlenstoffanteils bei bestimmten Pyrolysefeststoffen, wie beispielsweise Ruß, führen, was unerwünscht sein kann.

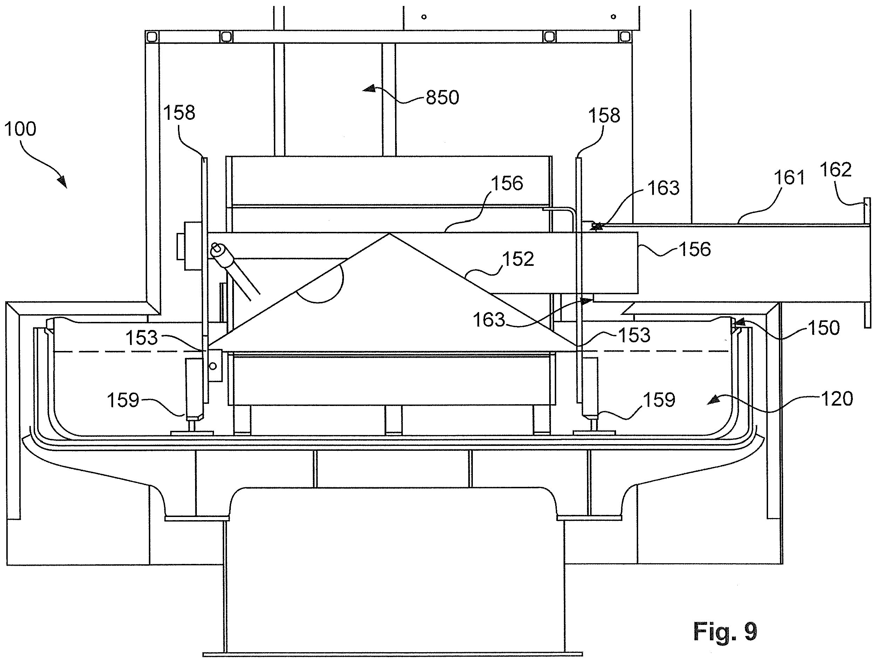

Das Trägerband 110 ist durch einen in Fig. 2 nicht näher dargestellten Motor angetrieben. In einer bevorzugten Ausführungsform umfasst das Trägerband 110 zusätzlich Putzerelemente, so dass etwaiges an der Oberfläche des Metallbades 120 schwimmendes Kleinmaterial ebenfalls über die Rampe 140 aus dem Metallbad 120 befördert werden kann, vgl. dazu auch die Beschreibung zu Fig. 9.

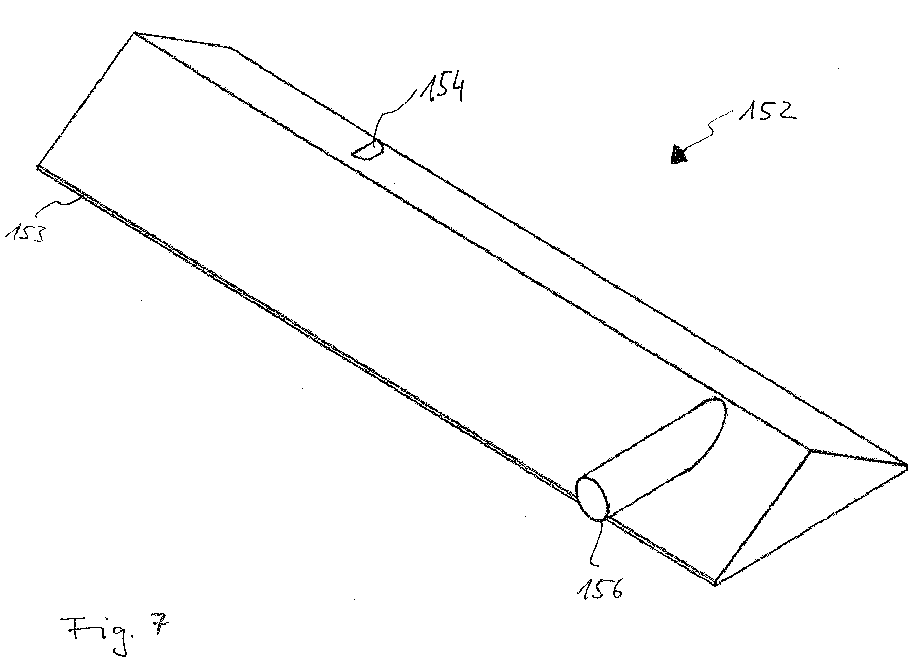

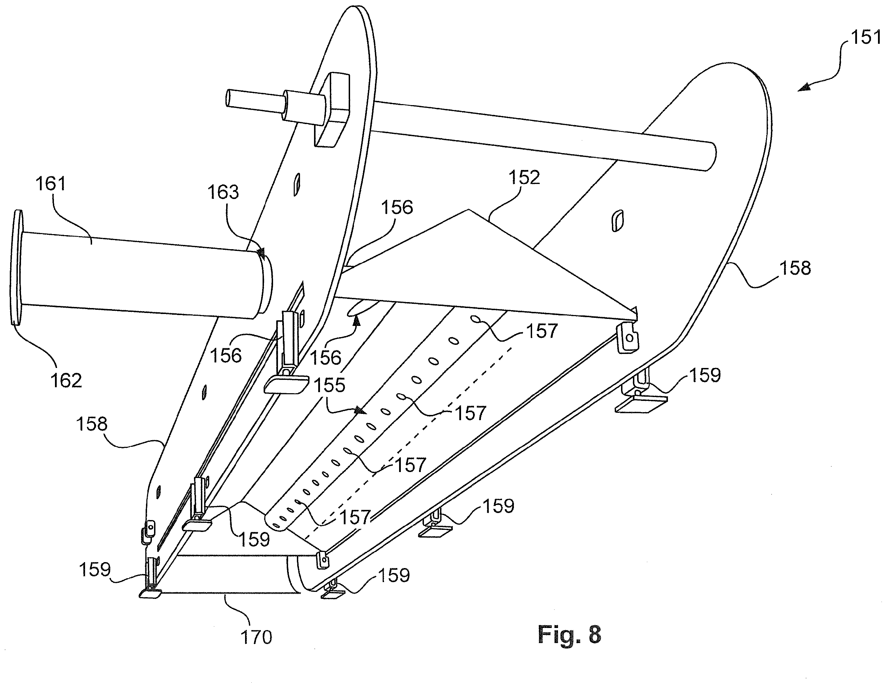

Zum schnellen und gerichteten Abführen der dampfförmigen Pyrolyseprodukte, die im Rahmen der Beschreibung der vorliegenden Erfindung auch kurz als Pyrolysedampf 130 bezeichnet werden, ist eine in Fig. 7 und in Fig. 8 näher dargestellte Haube vorgesehen. Die Haube ist in einer Ausführungsform derart angeordnet, dass diese das Trägerband 110 nahezu vollständig überdacht und in das Metallbad 120 ein wenig eintaucht, beispielsweise um etwa 5 mm. Durch diese Haube ist der Raum, den die Pyrolysedämpfe 130 über dem Metallbad 120 einnehmen können, verringert. Die Haube weist einen Einlassstuzen für das rückgeführte Pyrolysegas 720 auf. Ein Auslassstutzen der Haube dient der Abführung der Dämpfe hin zur Kondensationsvorrichtung 500. Das Fassungsvolumen der Haube sowie der Volumenstrom des rückgeführten Pyrolysegases 720 sind bevorzugt so bemessen, dass die Pyrolysedämpfe 130 nicht länger als einige Sekunden im Raum unterhalb der Haube verbleiben, beispielsweise nicht länger als 10 Sekunden.

Ein schnelles und gerichtetes Abführen des Pyrolysedampfes 130 aus dem Raum unterhalb der Haube ist vorteilhaft, da auf diese Weise ein Polymerisieren bzw. Rekombinationsreaktionen vermieden werden. Ein Polymerisieren bzw. Rekombinationsreaktionen entstehen beispielsweise aufgrund eines ungesättigten Bindungscharakters der oligemeren oder monomeren Kohlenwasserstoffmoleküle. Bei andauernder Erwärmung des Pyrolysedampfes 130 durch Kontakt mit der Oberfläche des Metallbades 120 oder durch Kontakt mit Elementen im Reaktorraum 180 käme es vermehrt zu Rekombinationsreaktionen und somit zu Ablagerungen hochkondensierter polyaromatischer Kohlenwasserstoffe und von Polymerisaten, beispielsweise also zu koks- oder asphaltartigen Ablagerungen. Die Ablagerungen finden sich nicht nur auf Elementen im Reaktorraum 180, sondern auch in den Verbindungsleitungen, beispielsweise den Verbindungsleitungen zwischen dem Reaktor 100 und der Kondensationsvorrichtung 500. Dies ist generell nachteilig. Durch die erfindungsgemäß vorgesehene Haube 152 und das kontrollierte Rückführen des Pyrolysegases 720 und das damit verbundene zügige und gerichtete Abführen der Pyrolysedämpfe 130 in die Kondensationsvorrichtung 500 werden oben beschriebene nachteilige Effekte weitestgehend vermieden.

Die erfindungsgemäße Vorrichtung 1000 zur Pyrolyse organischer Ausgangsstoffe 10 ist insgesamt weiter so ausgelegt, dass alle Rohrleitungen, insbesondere eine den Reaktorraum 180 und die Kondensationsvorrichtung 500 verbindende Rohrleitung, möglichst kurz sind, um durch Rekombinationsreaktionen hervorgerufene Ablagerungen zu vermeiden. Der Querschnitt der Rohrleitungen ist so gewählt, dass eine Strömung der Gase im laminaren Bereich erfolgt. In einer bevorzugten Ausführungsform sind die Rohrleitungen beheizt, um auch so eine durch Rekombinationsreaktion hervorgerufene Ablagerung zu vermeiden. In einer bevorzugten Ausführungsform ist zudem in den Rohrleitungen eine Reinigungsvorrichtung vorgesehen, welche ausgebildet ist, in bestimmen Zeitintervallen die Innenwände der Rohrleitungen zu reinigen und so von nicht gänzlich zu vermeidenden Ablagerungen zu befreien.

In der Kondensationsvorrichtung 500 erfolgt das an sich bekannte Überführen des Pyrolysedampfes 130 in ein Pyrolysegas, ein Pyrolyseöl sowie gegebenenfalls weitere Nebenprodukte.

Die Feststoffe werden durch das umlaufende Trägerband 110 und die Rampe 140 in den Austragsschacht 195 des Reaktors 100 befördert. Der Austragsschacht 195 hat bevorzugt auf der gesamten Länge bis zum Entgaser 200 eine im Wesentlichen gleiche Breite wie das Trägerband 110, so dass es im Austragsschacht 195 zu keinerlei Stauung und/oder Anbackungen der Feststoffe kommen kann. Im Austragsschacht 195 ist außerdem ein Schieber 196 vorgesehen, so dass der Reaktorprozessraum und der Entgaserraum bei Bedarf voneinander getrennt werden können. Im Normalbetrieb der Vorrichtung 1000 zur Pyrolyse organischer Ausgangsstoffe 10 ist der Schieber 196 geöffnet.

Der Entgaser 200 ist in einer Ausführungsform als Trog ausgeführt und umfasst eine Welle 210 mit einer Vielzahl Paddel 220, wobei die die Paddel 220 tragende Welle 210 zum Scheitel des Troges einen geringeren Abstand aufweist als zu den seitlichen Wänden des Troges. Durch die rotierende Bewegung der Welle 210 werden die in den Entgaser 200 gelangten Feststoffe mechanisch beansprucht und damit zerteilt, zerkleinert, sowie in einzelne Bestandteile separiert. Aufgrund der Trogform des Entgasers 200 bewegen sich die Feststoffe nicht spiralförmig durch den Entgaser, sondern fallen nach einer Drehung der Paddel 220, spätestens nach einer Drehung um etwa 90°, wieder zurück in den Scheitel des Troges und werden dort von dem nächsten Paddel erfasst. Dies fördert einen homogenen und gerichteten Feststoffstrom. Der Kühler ist aus demselben Grund ebenfalls in einer bevorzugten Ausführungsform als Trog ausgeführt.

Die Drehzahl der Welle 210 und/oder die Stellung der Paddel 220, beispielsweise definiert durch einen Winkel zur Wellenachse, sind bevorzugt steuerbar. Durch die Stellung der Paddel 220 und durch die Drehzahl bestimmt sich die Transportzeit der Fettstoffe vom unteren Ende des Entgasers 200 bis zum oberen Ende des Entgasers 200. Über die Transportgeschwindigkeit kann damit der auch Füllgrad des von dem den Feststoffen abgeschiedenen Metalls sowie die Verweilzeit der Feststoffe im Entgaser 200 eingestellt werden. Der Entgaser 200 ist angewinkelt angeordnet, beispielsweise in einem Winkel von 5° bis 40°, bevorzugt 15°, so dass abgeschiedenes und flüssiges Metall entgegen der Transportrichtung der Feststoffe fließen kann und sich in der Senke des Entgasers 200 sammelt.

Über ein Siphon 420 gelangt das flüssige Zinn in ein Depot 410 und schließlich über die Metallrückführung 400 zurück in die Wanne 150 für die Metallschmelze 120. Das Depot 410 ist derart gestaltet, dass über dem Metallspiegel 430 im Depot 410 eine normale Umgebungsatmosphäre herrscht und über eine in Fig. 1 nicht näher dargestellte Öffnung des Depots 410 Metall, auch in fester Form, eingetragen werden kann. Diese Öffnung dient beispielsweise dem Erstbefüllen der Wanne 150 oder einem Ergänzen der im Depot 410 bereits vorhandenen Metallmenge.

Der Entgaser 200 umfasst ferner eine in Fig. 1 nicht näher dargestellte Barriere, die verhindert, dass flüssiges Metall zu einem Ausgang des Entgasers 200 gelangt. Geschehe dies, könnte das Metall nicht mehr über die Metallrückführung 400 in die Metallschmelze 120 befördert werden. Die Barriere ist im höher liegenden Teil des Entgasers 200 angeordnet. Die den Pyrolysereaktor 100 verlassenden Feststoffe tragen nicht nur flüssiges Metall sondern auch Reste von Kohlenwasserstoffen aus, welche beim Nichtentfernen zu Geruchsproblemen und damit zu einer Einschränkung der Verwendungsmöglichkeiten führen könnten. In dem Entgaser 200 werden auch diese von den Feststoffen absorbierten Kohlenwasserstoffe wieder desorbiert, beispielsweise durch Verdampfen, und somit von den Feststoffen entfernt.

Durch das Zerkleinern der Feststoffe in dem Entgaser 200 werden aufgrund der damit einhergehenden Vergrößerung der Oberfläche der Feststoffe gute Voraussetzungen für die Desorption geschaffen.

Der Entgaser 200 umfasst ferner in Fig. 1 nicht näher dargestellte Heizer, die die für das Verdampfen der Kohlenwasserstoffreste notwendige Verdampfungsenthalpie in den Innenraum des Entgasers 200 einbringen. Beispielsweise sind diese Heizer als elektrische Flächenheizer an der äußeren Umhausung des Entgasers 200 angebracht. Ein Abführen der verdampften Anteile der Feststoffe ist in dieser Ausführungsform durch Einprägen eines Pyrolysegasstromes sichergestellt. Der Gasstrom strömt in einer der Transportrichtung entgegengesetzten Richtung durch den Entgaser 200 und über den Austragsschacht 195 hin in den Reaktorraum 180 über der Haube 152. Während des Betriebes der Vorrichtung 1000 zur Pyrolyse organischer Ausgangsstoffe 10 ist das Gas bevorzugt rückgeführtes Pyrolysegas 720 und während des Einfahrprozesses der Vorrichtung 1000 bevorzugt ein Inertgas, wie beispielsweise Stickstoff. Das dem Entgaser 200 zugeführte Gas ist durch einen Gaserhitzer 700 auf eine Temperatur von etwa 20°C bis 30°C über der Temperatur des Metallbades 120 erhitzt. Der Gasstrom ist bevorzugt so bemessen, dass nicht unnötig hohe Mengen des beim Trocknen der Feststoffe in geringen Mengen entstehenden Kohlenstoffstaubes mit ausgetragen werden. Beispielsweise ist der Gasstrom so bemessen, dass das Volumen des Innenraumes des Entgasers 200 einmal in 10 bis 15 Minuten ausgetauscht wird.

Der Kühler 300 dient dem Kühlen der Feststoffe auf eine Temperatur beispielsweise von unter 80°C. Durch einen zweiten Austragsschacht 310 ist der Entgaser 200 mit einem Eintrag des Kühlers 300 verbunden. Der zweite Austragsschacht 310 umfasst einen Schieber und stellt sicher, dass grundsätzlich, d.h., wenn kein Materialübertrag erfolgt, keine Gase des Kühlers 300 in den Raum des Entgasers 200 gelangen können. Der Kühler 300 ist ähnlich konstruiert wie der Entgaser 200; er umfasst eine Welle mit einer Vielzahl Paddel, ist in den meisten Ausführungsformen waagerecht angeordnet und in Trogform ausgeführt. Die von den Feststoffen abgegebene Wärme wird über einen im Kühler 300 befindlichen Kühlmantel an ein viskoses Wärmetransportmittel abgegeben, beispielsweise an ein Thermoöl oder an ein Kühlwasser. Der Gasdruck im Kühler 300 ist bevorzugt etwas höher als der Gasdruck im Entgaser 200 und im Pyrolysereaktor 100, beispielsweise um 10 mbar. Damit der Gasdruck im Kühler 300 gehalten werden kann, ist der Kühler 300 bevorzugt über ein Druckregelventil 726 mit einem Inertgasspeicher 810 verbunden. Dem Kühler 300 wird demnach beispielsweise dann Inertgas zugeführt, nachdem der Schieber im zweiten Austragsschacht 310 geöffnet worden ist oder nachdem der Kühler 300 zur Umgebung hin geöffnet worden ist.

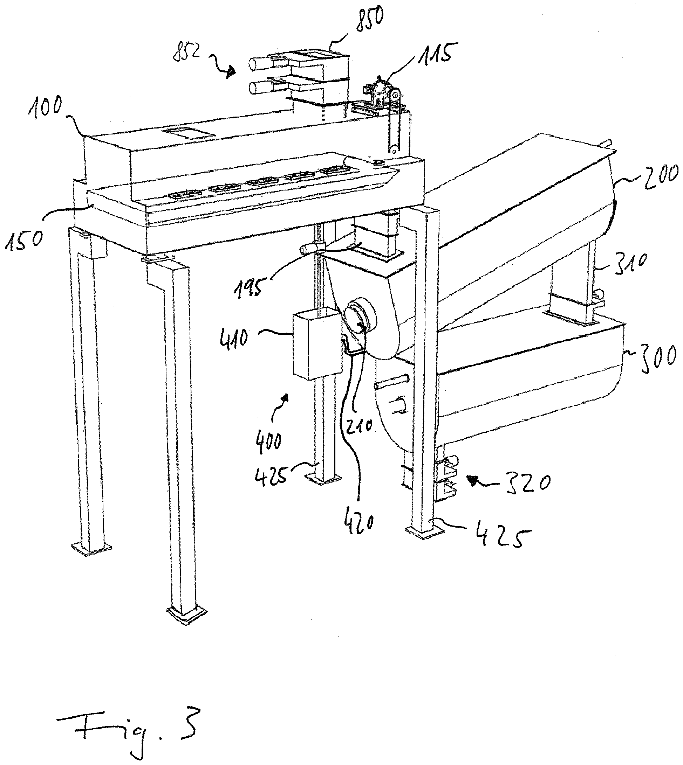

Fig. 3 zeigt eine bevorzugte Aufstellungsvariante der Anordnung aus Pyrolysereaktor 100, Entgaser 200, Metallrückführung 400 und Kühler 300; dabei bildet der Pyrolysereaktor 100 die höchstliegende Komponente. Fig. 3 zeigt nochmals einige Bestandteile des Pyrolysereaktors 100, beispielsweise die Wanne 150 für die Metallschmelze 120, Steueranschlüsse 852 für die Eingangsschleuse 800 sowie einen Motor 115 zum Antrieb des in Fig. 3 nicht dargestellten Trägerbandes 110. Der Pyrolysereaktor 100 ist über den Austragschacht 195 mit dem Entgaser 200 verbunden.

Wie bereits zur Beschreibung der Fig. 1 ausgeführt, ist der Entgaser 200 geneigt angeordnet, beispielsweise in einem Winkel von 15° bis 30°. Auf diese Weise sammelt sich das über den Feststoff in den Entgaser 200 gelangte und durch die rotierende Bewegung der Welle 210 gelöste Metall in einer Senke des Entgasers 200. Über das Siphon 420 wird das flüssige Metall in dem Depot 410 der Metallrückführung 400 gesammelt und schließlich zurück in die Wanne 150 des Pyrolysereaktors 100 befördert. Der Feststoffaustrag des Entgasers 200 ist über die Übernahmeschleuse 310 mit dem Feststoffeintrag des Kühlers 300 verbunden.

Der Kühler 300 ist ähnlich konzipiert wie der Entgaser 200, befindet sich jedoch in waagerechter Position. Fig. 3 zeigt ebenfalls Steueranschlüsse 320 für die Ausgangsschleuse 900.

Bei der in Fig. 3 dargestellten Ausführungsform erfolgt der Materialtransport zwischen den jeweiligen Komponenten der erfindungsgemäßen Vorrichtung 1000 mittels Schwerkraft, also im freien Fall. Dies hat zum einen den Vorteil, dass keine Mittel zum Befördern des Materials, also zum Befördern der Feststoffe vom Pyrolysereaktor 100 hin zum Entgaser 200 und vom Entgaser 200 hin zum Kühler 300, bereitgestellt werden müssen, was in einem kompakten Aufbau der Vorrichtung 1000 resultiert, und zum anderen, dass ein Anhaften der Feststoffe und/oder ein Verstopfen auf den jeweiligen Transportwegen vermieden wird.

Deutlich erkennbar in Fig. 3 ist auch die Trogform des Entgasers 200 und des Trockners 300.

Der Pyrolysereaktor 100 ist austragsseitig über Träger 425 und der Entgaser 200 eintragsseitig starr mit einem Bodenfundament verbunden. Ferner sind in dieser Ausführungsform der Pyrolysereaktor 100, der Entgaser 200 und der Kühler 300 im Übrigen derart gelagert, dass diese jeweils in beide Richtungen mindestens einer Raumachse relativ zum Bodenfundament beweglich sind. Auf diese Weise wird einer möglichen Änderung der geometrischen Abmessungen des Pyrolysereaktors 100, des Entgasers 200 und des Kühlers 300 auf Grund einer Veränderung der Temperatur Rechnung getragen. Beispielsweise sind der Pyrolysereaktor 100 und der Entgaser 200 über den Austragsschacht 310 starr miteinander verbunden und auf der jeweils anderen Seite in Längsrichtung beweglich gelagert, beispielsweise auf einem Kugellager.

Fig. 4 zeigt den Ausschnitt eines Wandstückes 144, das an eine Wandaufnahme 146 der Pyrolysereaktorwandung 148 lösbar angeschweißt ist. Sowohl das Wandstück 144 als auch die Wandaufnahme 146 haben beim Anbringen des Wandstückes 144 im Wesentlichen parallel angeordnete Kontaktflächen. Zum Einlagern und zum Auslagern kann die Schweißnaht 142 gelöst werden. Die Kontaktflächen wirken damit im Sinne eines Opferkragens 143, da mit jedem Lösen der Schweißnaht, beispielsweise durch Abschleifen, unter Umständen auch ein Teil der Kontaktflächen selbst abgehoben wird.

Fig. 5 zeigt ein Heizelement 182. Das Heizelement 182 ist als L-förmiger, resistiver und elektrischer Heizer ausgeführt, wobei die hierfür notwendige Elektronik in einem Kasten 184 integriert ist. Statt einem Heizstab sind in anderen Ausführungsformen des Heizelementes eine Vielzahl Heizstäbe vorgesehen. Für die manuelle Montage des Heizelementes 182 sind zwei Griffe 186 vorgesehen. Zur Installation wird das Heizelement 182 zunächst so in eine neben der Wanne 150 angeordnete Halterung eingeführt, dass der längliche Teil des L-förmigen Heizstabes 181 parallel zu einer Längsseite der Wanne 150 liegt. Nach einem Absenken des Heizelementes 182 wird selbiges um etwa 90 Grad gedreht, so dass der Heizstab 181 senkrecht zur Längsrichtung der Wanne 150 angeordnet ist. Bei dem Heizelement 182 ist ein Rahmen 185 vorgesehen, der auf einer Auflage einer neben der Wanne 150 angeordneten Halterung aufliegt. Im Pyrolysereaktor 100 sind eine Vielzahl Heizelemente vorgesehen, die jeweils während des Betriebes gewechselt werden können. Dabei bildet das Metallbad 120 selbst eine gasdichte Durchführung, die den Luftzutritt in den Reaktorraum verhindert.

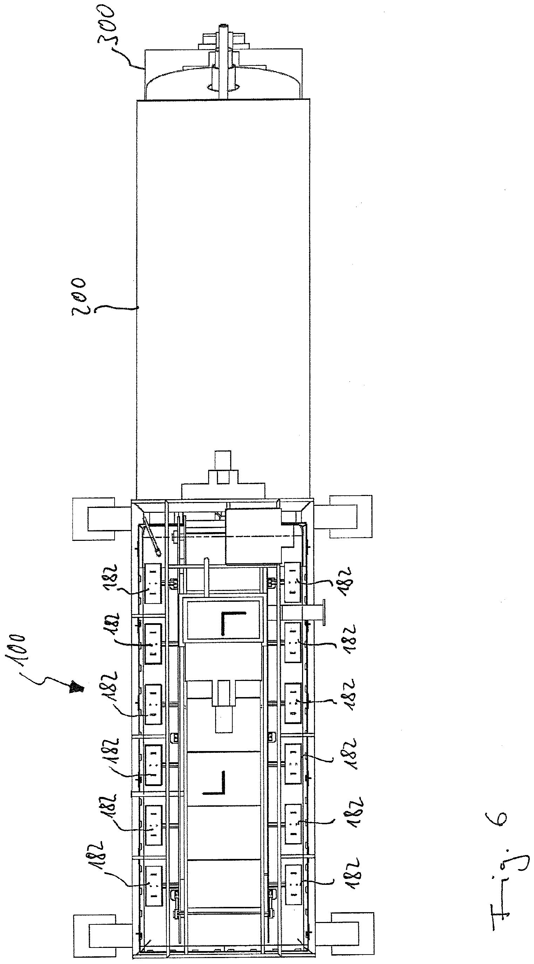

Fig. 6 zeigt eine Draufsicht des Pyrolysereaktors 100, des Entgasers 200 und des Kühlers 300. Die in Fig. 6 dargestellte Anordnung entspricht im Wesentlichen der Anordnung aus Fig. 3. In der in Fig. 6 dargestellten Ausführungsform der Vorrichtung 1000 zur Pyrolyse organischer Ausgangsstoffe 10 umfasst der Pyrolysereaktor 100 zwölf Heizelemente 182. Jedes dieser Heizelemente 182 kann während des Betriebes des Pyrolysereaktors 100 ausgetauscht werden. Der Heizstab 181 eines jeweiligen Heizelementes 182 ragt in zur Längsrichtung der Wanne 150 senkrechter Richtung in die Metallschmelze 120.

Fig. 7 zeigt eine Draufsicht einer bevorzugten Ausführungsform der über dem Trägerband 110 angeordneten Haube 152. Eine Umfassung 153 der Haube 152 ist um eine bestimmte Distanz, wie beispielsweise einige Millimeter, in die Metallschmelze 120 eingesenkt. Über einen Einlaufstutzen 154 wird rückgeführtes Pyrolysegas 720 dem Reaktorraum 180 unterhalb der Haube 150 und oberhalb des Trägerbandes 110 zugeführt. Zum Austrag der während der Pyrolyse entstehenden Pyrolysedämpfe 130 ist ein Auslaufstutzen 156 vorgesehen, der über eine Rohrleitung zu der Kondensationsvorrichtung 500 führt. Durch das Rückführen des Pyrolysegases 720 in den Reaktorraum 180 wird ein schnelles und gerichtetes Ableiten der Pyrolysedämpfe 130 erzielt. Dies ist vorteilhaft, da, wie oben bereits mehrfach erläutert, auf diese Weise ein Polymerisieren bzw. Rekombinationsreaktionen im Pyrolysedampf 130, die auf Grund des ungesättigten Bindungscharakters der oligemeren oder monomeren Kohlenwasserstoffmoleküle entstehen können, weitestgehend vermieden werden.

Fassungsvolumen der Haube 152 sowie der Betrag des Stromes des zurückgeführten Pyrolysegases 720 sind bevorzugt so bemessen, dass die Pyrolysedämpfe 130 grundsätzlich nicht länger als etwa 10 Sekunden im Reaktorraum 180 verbleiben. Dazu ist bevorzugt ein Druckregelventil 725 vorgesehen.

Fig. 8 zeigt eine bevorzugte Installation 151 einer Ausführungsvariante der Haube 152 im (in Fig. 8 nicht dargestellten) Pyrolysereaktorraum. Die Haube 152 wird dabei von einem Gestell 158 getragen, welches über eine Vielzahl Füße 159 ausgerichtet werden kann. Der in dieser Fig. nicht sichtbare Einlaufstutzen 154 führt von der Außenwand der Haube 152 zu einem Diffusor 155 der Haube 152, der gewährleistet, dass der Raum unterhalb der Haube 152 im Wesentlichen räumlich gleichverteilt mit Pyrolysegas gespült wird. Der Diffusor 155 erstreckt sich in der in Fig. 8 dargestellten Ausführungsform über die gesamte Länge der Haube 152 und umfasst für das Spülen eine Vielzahl Auslasslöcher 157, so dass sich das einströmende Pyrolysegas möglichst gleichmäßig im Raum unterhalb der Haube 152 verteilt.

Die Installation 151 zur Montage der Haube 152 befindet sich vollständig im Reaktorraum 180. Ebenfalls in Fig. 8 sichtbar ist das mit dem Gestell 158 verbundene Umlenkblech 170, welches ein Herausfallen der sich auf dem Trägerband 110 befindlichen Ausgangsstoffe 10 bei der ersten Umlenkung verhindert.

Der Auslaufstutzen 156 zum Abführen des Pyrolysedampfes hin zur Kondensationsvorrichtung 500 ragt durch das Gestell 158 einige Zentimeter in einen Verbindungsstutzen 161 hinein. Der Verbindungstutzen 161 grenzt nicht direkt an das Gestell 158 für die Haube 152, sondern ist um eine bestimmte Distanz von diesem beabstandet. Dadurch entsteht ein zusätzlicher Einlauf 163, der insbesondere einem Abführen der Gase oberhalb der Haube 152 hin zur Kondensationsvorrichtung 500 dient. Wie bereits weiter oben ausgeführt, strömt der Trocknungsgasstrom, hier vorerhitztes Pyrolysegas, gegen die Feststofftransportrichtung im Entgaser 200 durch den Austragsschacht 195 in den Pyrolysereaktorraum, und zwar zum größeren Teil in den Raum über der Haube 152. Dieser Gasstrom strömt sodann über den Einlauf 163 hin zur Kondensationsvorrichtung 500.

Der Verbindungsstutzen 161 ist über einen Flansch 162 mit der Reaktorumhausung verbunden.

Fig. 9 zeigt einen Querschnitt durch eine bevorzugte Ausführungsform des Pyrolysereaktors 100. Sie zeigt unter anderem den Reaktoreintragsschacht 850 und die das Metallbad 120 fassende Wanne 150. Die gestrichelte horizontale Linie deutet den Pegelstand des Metallbades 120 an. In der Wanne befindet sich der untere Teil des Trägerbandes 110 sowie das Gestell 158 zum Tragen der Haube 152. Deutlich erkennbar sind der in den Verbindungsstutzen 161 hineinragende Auslaufstutzen 156 sowie der Einlauf 163 zum Abführen der Gase des Raumes oberhalb der Haube 152.

Zum Erhalten der Reinheit der Metallschmelze 120 sind in einer bevorzugten Ausführungsform am in Fig. 9 nicht unmittelbar erkennbaren Trägerband 110 befestigte Putzerelemente zum Aufnehmen und Entfernen in der Metallschmelze 120 schwimmender Feststoffe vorgesehen. Derartige Feststoffe könnten beispielsweise über die Außenwand der Haube 152 in die Metallschmelze 120 gelangen. Die Putzerelemente, die beispielsweise als Wischblätter ausgestaltet sind, ragen daher bevorzugt über die Umfassung 153 der das Trägerband 110 überdachenden Haube 152 hinaus einige Zentimeter in die Metallschmelze 120 hinein und sind etwa senkrecht zur Bewegungsrichtung des Trägerbandes 110 und etwa parallel zur Oberfläche des Metallbades 120 angeordnet. Durch Bewegung des Trägerbandes 110 gleiten die Putzerelemente - teils über und teils unter der Metallbadoberfläche - durch das Metallbad 120 und nehmen somit sich dort befindliche Feststoffe auf und befördern diese über die in Fig. 9 nicht erkennbare Rampe 140 hin zum ebenfalls nicht in Fig. 9 erkennbaren Austragsschacht 195 des Pyrolysereaktors 100.

Die vorliegende Erfindung betrifft eine Vorrichtung zur kontinuierlichen Pyrolyse organischer Ausgangsstoffe. Die Vorrichtung umfasst einen Pyrolysereaktor mit einem Zinnbad als Pyrolysebad einer Temperatur von etwa 480°C, einen Entgaser zum Metallabscheiden und Desorbieren von Kohlenwasserstoffresten sowie einen Kühler zum Kühlen, Zerkleinern und Ausgaben der Pyrolysefeststoffe. Die Ausgangsstoffe, beispielsweise zerkleinerte Altreifen, sind dem Pyrolysereaktor über eine Eingangsschleuse zugeführt. Im Reaktor ist eine Haube angeordnet, die den Raum, den die Pyrolysedämpfe einnehmen können, reduziert und die einen Einlass für rückgeführtes Pyrolysegas aufweist. Durch Einbringen eines bestimmten Pyrolysegasstromes in den Reaktorraum ist ein schnelles und gerichtetes Ableiten der Pyrolysedämpfe hin zu einer Kondensationsvorrichtung gewährleistet. Die erfindungsgemäße Vorrichtung zeichnet sich insbesondere durch eine Metallrückführung auf, die im Entgaser abgeschiedenes Metall zurück in das Pyrolysebad befördert.

### Bezugszeichenliste

- 10: Ausgangsstoffe
- 20: Abluft
- 100: Pyrolysereaktor
- 110: Trägerband
- 115: Motor
- 120: Metallschmelze
- 130: Pyrolysedämpfe
- 140: Rampe
- 142: Schweißnaht
- 143: Opferkragen
- 144: Wandstück
- 146: Wandaufnahme
- 148: Pyrolysereaktorwandung
- 150: Wanne für Metallschmelze
- 151: Installation der Haube
- 152: Haube
- 153: Umfassung
- 154: Einlaufstutzen für Pyrolysegas
- 155: Diffusor
- 156: Auslaufstutzen für Pyrolysedampf
- 157: Auslasslöcher
- 158: Gestell für die Haube
- 160: Kettensegment
- 161: Verbindungsstutzen
- 162: Flansch
- 163: Einlauf
- 170: Umlenkblech
- 180: Reaktorraum
- 181: Heizstab
- 182: Heizelement
- 184: Kasten
- 185: Rahmen
- 186: Griffe
- 195: Austragsschacht des Pyrolysereaktors
- 196: Schieber des Austragsschachtes
- 200: Entgaser
- 210: Welle
- 220: Paddel
- 300: Kühler
- 310: Zweiter Austragsschacht
- 320: Steueranschlüsse für Ausgangsschleuse
- 400: Metallrückführung
- 410: Depot der Metallrückführung
- 420: Siphon
- 425: Träger
- 430: Metallspiegel im Depot
- 500: Kondensationsvorrichtung
- 510: Kompressor
- 600: Gaszwischenspeicher
- 610: Pyrolysegasleitung
- 700: Gaserhitzer
- 720: Rückgeführtes Pyrolysegas
- 725: Druckregelventil für Pyrolysegasstrom
- 726: Druckregelventil für Inertgasstrom
- 800: Eingangsschleuse
- 810: Inertgasbehälter
- 820: Erste Vakuumpumpe für die Abluft der Eingangsschleuse
- 830: Zweite Vakuumpumpe für die Abgase der Eingangsschleuse
- 840: Abgasleitung
- 850: Reaktoreintrag
- 851: Schieber Eintragsschacht
- 852: Steueranschlüsse für Eingangsschleuse
- 900: Ausgangsschleuse
- 910: Pyrolysefeststoffe
- 920: Pyrolysegas
- 930: Pyrolyseöl
- 1000: Vorrichtung zur Pyrolyse organischer Ausgangsstoffe

## Patentansprüche

1. Vorrichtung (1000) zur kontinuierlichen Pyrolyse organischer Ausgangsstoffe (10), umfassend:
- einen Pyrolysereaktor (100) mit einem Träger (110), wobei der Pyrolysereaktor (100) ausgebildet ist, die organischen Ausgangsstoffe (10) mittels des Trägers (110) aufzunehmen und zum Zersetzen derselben diese durch eine in einer Wanne (150) befindliche Metallschmelze (120) einer Temperatur von 400°C bis 700°C zu befördern;
- eine mit dem Pyrolysereaktor (100) verbundene Kondensationsvorrichtung (500), die ausgebildet ist, während der Pyrolyse entstehende Pyrolysedämpfe (130) aufzunehmen sowie diese in eine gasförmige Phase und in eine flüssige Phase zu überführen;
- einen mit dem Pyrolysereaktor (100) verbundenen Entgaser (200) zur Aufnahme von Feststoffen aus der Metallschmelze (120) und zur Desorption von Kohlenwasserstoffen, der ausgebildet ist, die Feststoffe zu zerkleinern und an diesen haftendes Metall der Metallschmelze (120) zu lösen sowie zu sammeln;
- eine Metallrückführung (400), die zum Rückführen des von dem Entgaser (200) gelösten und gesammelten Metalls in die Metallschmelze (120) des Pyrolysereaktors (100) ausgebildet ist und zwischen der Wanne (150) für die Metallschmelze (120) und dem Entgaser (200) angeordnet ist;
- einen mit dem Entgaser (200) verbundenen Kühler (300), der ausgebildet ist, die zerkleinerten und gereinigten Feststoffe aufzunehmen und zu kühlen sowie als Pyrolysefeststoffe (910) bereitzustellen, sowie
- ein Gasrückführungssystem, das ausgebildet ist, durch die Kondensationsvorrichtung (500) erzeugtes Pyrolysegas zumindest teilweise dem Reaktorraum (180) zuzuführen..

2. Vorrichtung (1000) nach Anspruch 1, bei der die Metallrückführung (400) ausgebildet ist, einen Pegelstand der in der Wanne (150) befindlichen Metallschmelze (120) zu regeln.

3. Vorrichtung (1000) nach Anspruch 1, bei der der Entgaser (200) unterhalb des Pyrolysereaktors (100) und geneigt angeordnet ist.

4. Vorrichtung (1000) nach Anspruch 3, bei der der Entgaser (200) zum Sammeln des gelösten Metalls in einem Winkel zwischen 5° und 40° angeordnet ist.

5. Vorrichtung (1000) nach Anspruch 1, bei der der Entgaser (200) unterhalb des Pyrolysereaktors (100) und der Kühler (300) unterhalb des Entgasers (200) angeordnet sind.

6. Vorrichtung (1000) nach Anspruch 1, bei der der Pyrolysereaktor (100) austragsseitig und der Entgaser (200) eintragsseitig starr mit einem Bodenfundament verbunden sind und bei der der Pyrolysereaktor (100), der Entgaser (200) und der Kühler (300) im Übrigen derart gelagert sind, dass diese jeweils in beide Richtungen mindestens einer Raumachse relativ zum Bodenfundament beweglich sind.

7. Vorrichtung (1000) nach Anspruch 1, bei der der Entgaser (200) und/oder der Kühler (300) eine Welle (210) mit einer Vielzahl Paddel (220) aufweist/aufweisen und ausgebildet ist/sind, zum Transport der Feststoffe eine alternierend rechtsdrehende und linksdrehende Rotation der Welle (210) zu veranlassen, wobei die Rotation einer Richtung einen weiteren Transport der Feststoffe verursacht als die Rotation der anderen Richtung.

8. Vorrichtung (1000) nach Anspruch 1, bei der der Entgaser (200) und/oder der Kühler (300) Mittel zum temporären Stauen der Feststoffe im Entgaser (200) / im Kühler (300) aufweist/aufweisen und ausgebildet ist/sind, die temporär gestauten Feststoffe durch ein getaktetes Überheben zu einem Feststoffaustrag des Entgasers (200) / des Kühlers (300) auszugeben.

9. Vorrichtung (1000) nach Anspruch 1, bei der der Pyrolysereaktor (100) zum Erhitzen der Metallschmelze (120) eine Vielzahl austauschbarer Heizelemente (182) mit jeweils mindestens einem Heizstab (181) umfasst, bei der ein jeweiliger Heizstab (181) vorzugsweise die Form eines großgeschriebenen "L" aufweist.

10. Vorrichtung (1000) nach Anspruch 1, bei der der Pyrolysereaktor (100) zusätzlich eine über der Wanne (150) angeordnete Haube (152) umfasst, die einen Einlassstutzen (154) und einen Auslassstutzen (156) umfasst, wobei das rückgeführte Pyrolysegas (720) dem Raum unterhalb der Haube (152) über den Einlassstutzen (154) zugeführt ist und einem Spülen des Raumes unterhalb der Haube dient und der während Pyrolyse erzeugter Pyrolysedampf (130) über den Auslaufstutzen (156) der Kondensationsvorrichtung (500) zugeführt ist.

11. Vorrichtung (1000) nach Anspruch 1, bei der der Pyrolysereaktor (100) zum Einlagern und Auslagern der Wanne (150) ein Wandstück (144) aufweist, das an eine Wandaufnahme (146) der Pyrolysereaktorwandung (148) lösbar angeschweißt ist, wobei sowohl das Wandstück (144) als auch die Wandaufnahme (146) im Wesentlichen parallel angeordnete Kontaktflächen aufweisen, die im Sinne eines Opferkragens (143) wirken.

12. Vorrichtung (1000) nach Anspruch 1, bei der der Kühler (300) mit dem Entgaser (200) über einen zweiten Austragsschacht (310) umfassend einen Schieber verbunden ist und eine Ausgangsschleuse (900) zur Ausgabe der Pyrolysefeststoffe umfasst sowie ausgebildet ist, den Schieber des zweiten Austragsschachtes (310) und die Ausgangsschleuse (900) zeitlich versetzt zu betreiben, so dass der zweite Austragsschacht (310) und die Ausgangsschleuse (310) nicht gleichzeitig in einem geöffneten Zustand sind.

13. Vorrichtung (1000) nach Anspruch 1, bei der die Metallschmelze (120) als Zinnbad realisiert ist.

14. Vorrichtung (1000) nach Anspruch 1, bei der im Reaktorraum (180) über der Metallschmelze (120) ein Überdruck zwischen 20 und 120 Millibar (mbar) herrscht.

## Claims

1. Device (1000) for the continual pyrolysis of organic starting materials (10), comprising:
- a pyrolysis reactor (100) with a support (110), wherein the pyrolysis reactor (100) is designed to receive the organic starting materials (10) by means of the support (110) and for breaking down the latter to convey them through a metal melt (120) in a bath (150) at a temperature of 400 °C to 700 °C;
- a condensation device (500) connected to the pyrolysis reactor (100) which is designed to receive pyrolysis vapour (130) created during the pyrolysis and covert the latter into a gaseous phase and a liquid phase;
- a deaerator (200) connected to the pyrolysis reactor (100) for receiving solid materials from the metal melt (120) and for desorbing hydrocarbons, which is designed to crush the solid materials and release and collect metals of the metal melt (120) adhering to the latter;
- a metal recirculation line (400), which is designed to recirculate the metal released and collected from the deaerator (200) into the metal melt (120) of the pyrolysis reactor (100) and is arranged between the bath (150) for the metal melt (120) and the deaerator (200);
- a cooler (300) connected to the deaerator (200), which cooler is designed to receive the crushed and cleaned solid materials, to cool them and prepare them as pyrolysis solid materials (910),
- a gas recirculating system which is designed to feed pyrolysis gas produced by the condensation device (500) at least partly to the reactor chamber (180).

2. Device (1000) according to claim 1, wherein the metal recirculation line (400) is designed to control a filling level of the metal melt (120) in the bath (150).

3. Device (1000) according to claim 1, wherein the deaerator (200) is arranged underneath the pyrolysis reactor (100) and is inclined.

4. Device (1000) according to claim 3, wherein the deaerator (200) is arranged for collecting the released metal at an angle of between 5° and 40°.

5. Device (1000) according to claim 1, wherein the deaerator (200) is arranged underneath the pyrolysis reactor (100) and the cooler (300) is arranged underneath the deaerator (200).

6. Device (1000) according to claim 1, wherein the pyrolysis reactor (100) is connected securely on the discharge side to a base foundation and the deaerator (200) is connected securely on the input side to said base foundation and wherein the pyrolysis reactor (100), the deaerator (200) and the cooler (300) are otherwise mounted such that the latter can move respectively in both directions of at least one spatial axis relative to the base foundation.

7. Device (1000) according to claim 1, wherein the deaerator (200) and/or the cooler (300) comprises/comprise a shaft (210) with a plurality of paddles (220) and is/are designed for transporting the solid materials to initiate an alternate clockwise and anti-clockwise rotation of the shaft (210), wherein rotation in one direction causes the further transport of the solid materials than rotation in the other direction.

8. Device (1000) according to claim 1, wherein the deaerator (200) and/or the cooler (300) comprises/comprise means for the temporary damming of solid materials in the deaerator (200)/in the cooler (300) and is/are designed to discharge the temporarily dammed solid materials in a timed relieving process to a solid material discharge of the deaerator (200)/cooler (300).

9. Device (1000) according to claim 1, wherein the pyrolysis reactor (100) for heating the metal melt (120) comprises a plurality of exchangeable heating elements (182) each with at least one heating rod (181) respectively, wherein a respective heating rod (181) preferably has the form of a capitalised "L".

10. Device (1000) according to claim 1, wherein the pyrolysis reactor (100) also comprises a hood (152) arranged over the bath (150), which comprises an inlet nozzle (154) and an outlet nozzle (156), wherein the returned pyrolysis gas (720) is supplied to the space below the hood (152) via the inlet nozzle (154) and is used to rinse the space below the hood and the pyrolytic vapour (130) produced during the pyrolysis is fed via the outlet nozzle (156) to the condensation device (500).

11. Device (1000) according to claim 1, wherein the pyrolysis reactor (100) comprises a wall piece (144) for storing the bath and removing the bath (150) from storage, which wall piece is welded detachably to a wall mount (146) of the pyrolysis reactor wall (148), wherein both the wall piece (144) and also the wall mount (146) have essentially parallel contact surfaces which function in the manner of a sacrificial collar (143).

12. Device (1000) according to claim 1, wherein the cooler (300) is connected to the deaerator (200) by means of a second discharge shaft (310) comprising a slider and comprises an outlet gate (900) for discharging solid pyrolysis materials and is designed to operate the slider of the second discharge shaft (310) and the outlet gate (900) on a time staggered basis, so that the second discharge shaft (310) and the outlet gate (310) are not in an open state at the same time.

13. Device (1000) according to claim 1, wherein the metal melt (120) is in the form of a tin bath.

14. Device (1000) according to claim 1, wherein in the reactor chamber (180) there is a pressure of between 20 and 120 millibar (mbar) over the metal melt (120).

## Revendications

1. Installation (1000) de pyrolyse continue de substances (10) organiques de départ, comprenant :
- un réacteur (100) de pyrolyse, ayant un support (110), le réacteur (100) de pyrolyse étant constitué pour recevoir les substances (10) organiques au moyen du support (110) et, pour les décomposer, à les transporter dans du métal (120) fondu se trouvant dans une cuve (150) à une température de 400°C à 700°C;
- un dispositif (500) de condensation, qui est relié au réacteur (100) de pyrolyse et qui est constitué pour recevoir des vapeurs (130) de pyrolyse se créant pendant la pyrolyse, ainsi que pour faire passer celles-ci en une phase gazeuse et en une phase liquide;
- un dégazeur (200) relié au réacteur (100) de pyrolyse pour la réception de substances solides du métal (120) fondu et pour la désorption d'hydrocarbures, qui est constitué pour fragmenter les substances solides et pour détacher, ainsi que recueillir, du métal y adhérent du métal (120) fondu;
- un retour (400) de métal, constitué pour retourner le métal détaché et recueilli du dégazeur (200) au métal (120) fondu du réacteur (100) de pyrolyse et disposé entre la cuve (150) pour le métal (120) fondu et le dégazeur (200);
- un refroidisseur (300) relié au dégazeur (200), qui est constitué pour recevoir des matières solides fragmentées et épurées et pour les refroidir, ainsi que les mettre à disposition, comme substances solides de pyrolyse (910), ainsi que
- un système de retour de gaz, qui est constitué pour envoyer du gaz de pyrolyse produit par le dispositif (500) de condensation, au moins en partie, à l'espace (180) du réacteur.

2. Installation (1000) suivant la revendication 1, dans laquelle le retour (400) de métal est constitué pour réguler un niveau du métal (120) fondu se trouvant dans la cuve (150).

3. Installation (1000) suivant la revendication 1, dans laquelle le dégazeur (200) est disposé en dessous du réacteur (100) de pyrolyse et est incliné.

4. Installation (1000) suivant la revendication 3, dans laquelle le dégazeur (200) est, pour recueillir le métal détaché, disposé suivant un angle compris entre 5° et 40°.

5. Installation (1000) suivant la revendication 1, dans laquelle le dégazeur (200) est disposé en dessous du réacteur (100) de pyrolyse et le refroidisseur (300) en dessous du dégazeur (200).

6. Installation (1000) suivant la revendication 1, dans laquelle le réacteur (100) de pyrolyse est relié, du côté de la sortie, et le dégazeur (200), du côté de l'entrée, rigidement à une fondation au sol et dans laquelle le réacteur (100) de pyrolyse, le dégazeur (200) et le refroidisseur (300) sont montés, en outre, de manière à être mobiles respectivement dans les deux sens d'au moins un axe de l'espace par rapport à la fondation au sol.

7. Installation (1000) suivant la revendication 1, dans laquelle le dégazeur (200) et/ou le refroidisseur (300) a/ont un arbre (210) ayant une pluralité de palettes (220) et est/sont constitués pour provoquer, pour le transport des matières solides, une rotation de l'arbre (210) en alternance en tournant à droite et en tournant à gauche, la rotation dans un sens provoquant un transport autre des matières solides que la rotation dans l'autre sens.

8. Installation (1000) suivant la revendication 1, dans laquelle le dégazeur (200) et/ou le refroidisseur (300) a/ont des moyens d'accumulation temporaire des matières solides dans le dégazeur (200)/dans le refroidisseur (300) et est/sont constitués pour envoyer les matières solides accumulées temporairement, par un soulèvement cadencé, à une sortie des matières solides du dégazeur (200)/du refroidisseur (300).

9. Installation (1000) suivant la revendication 1, dans laquelle le réacteur (100) de pyrolyse a, pour réchauffer le métal (120) fondu, une pluralité d'éléments (182) chauffants remplaçables, ayant chacun au moins un barreau (181) chauffant, dans laquelle le un barreau (181) chauffant a, de préférence, la forme d'un "L" majuscule.

10. Installation (1000) suivant la revendication 1, dans laquelle le réacteur (100) de pyrolyse comprend, en outre, une hotte (152), qui est disposée au-dessus de la cuve (150) et qui comprend une tubulure (154) d'entrée et une tubulure (156) de sortie, le gaz (720) de pyrolyse retourné étant envoyé à l'espace en dessous de la hotte (152) par l'intermédiaire de la tubulure (154) d'entrée et servant à balayer l'espace en dessous de la hotte et la vapeur (130) de pyrolyse produite pendant la pyrolyse étant envoyée au dispositif (500) de condensation par la tubulure (156) de sortie.

11. Installation (1000) suivant la revendication 1, dans laquelle le réacteur (100) de pyrolyse a, pour le montage et le démontage de la cuve (150), une pièce (144) de paroi, qui est soudée de manière amovible à une logement (146) de la paroi (148) du réacteur de pyrolyse, à la fois la pièce (144) de paroi et le logement (146) de paroi ayant des surfaces de contact, qui sont disposées sensiblement parallèlement et qui servent de collet (143) sacrificiel.

12. Installation (1000) suivant la revendication 1, dans laquelle le refroidisseur (300) est relié au dégazeur (200) par un deuxième puits (310) d'extraction comprenant un tiroir et comprend un sas (900) de sortie pour la sortie des substances solides de pyrolyse, ainsi qu'est constitué, pour faire fonctionner, d'une manière décalée dans le temps, le tiroir du deuxième puits (310) d'extraction et le sas (900) de sortie, de manière à ce que le deuxième puits (310) d'extraction et le sas (310) de sortie ne soient pas en même temps dans un état ouvert.

13. Installation (1000) suivant la revendication 1, dans laquelle le métal (120) fondu est réalisé sous la forme d'un bain d'étain.

14. Installation (1000) suivant la revendication 1, dans laquelle, dans l'espace (180) du réacteur, règne, au-dessus du métal (120) fondu, une surpression comprise entre 20 et 120 millibar (mbar).
